**Europäisches Patentamt**

**European Patent Office**

**Office européen des brevets**

(19)

(11) Veröffentlichungsnummer: **0 161 536**
**B1**

(12) # EUROPÄISCHE PATENTSCHRIFT

(45) Veröffentlichungstag der Patentschrift:
08.03.89

(51) Int. Cl.⁴: **G 11 B 5/702**

(21) Anmeldenummer: 85104797.7

(22) Anmeldetag: 20.04.85

(54) **Magnetische Aufzeichnungsträger.**

(30) Priorität: 18.05.84 DE 3418482

(43) Veröffentlichungstag der Anmeldung:
21.11.85 Patentblatt 85/47

(45) Bekanntmachung des Hinweises auf die Patenterteilung:
08.03.89 Patentblatt 89/10

(84) Benannte Vertragsstaaten:
DE FR GB NL

(56) Entgegenhaltungen:
EP-A-0 137 307
EP-A-0 137 308
EP-A-0 141 147
DE-A-3 207 293
FR-A-1 311 588
GB-A-2 084 589

(73) Patentinhaber: BASF Aktiengesellschaft, Carl-Bosch- Strasse 38, D-6700 Ludwigshafen (DE)

(72) Erfinder: **Heil, Guenter, Dr., Dirmsteiner Weg 41, D-6700 Ludwigshafen (DE)**
Erfinder: **Lenz, Werner, Dr., Heinrich- Baermann-Strasse 14, D-6702 Bad Dürkheim (DE)**
Erfinder: **Kovacs, Jenoe, Dr., Kantstrasse 9, D-6717 Hessheim (DE)**

## Beschreibung

Die Erfindung betrifft magnetische Aufzeichnungsträger aus einem magnetischen Trägermaterial mit mindestens einer Magnetschicht mit darin fein verteiltem magnetischen Material, wobei die Bindemittelmatrix durch Elektronenstrahlhärtung einer Mischung aus 60 bis 100 Gew.-% eines Polyurethanacrylatpolymeren mit polymerisierbaren Acrylester-Doppelbindungen und 0 bis 40 Gew.-% eines Acrylsäureestermonomeren und/oder -präpolymeren und/oder N-Vinylmonomeren erhalten wird.

Die derzeit vorwiegend verwendeten magnetischen Aufzeichnungsträger in Form von Audio-, Video- und Computerbändern sowie anderer magnetischer Datenträger mit flexiblen oder harten Trägermaterialien wie Floppy-Disk oder Hard-Disk, werden meist dadurch hergestellt, daß man Magnetdispersionen aus Magnetpigmenten und mechanisch hochwertigen Bindemitteln herstellt, auf den Träger aufbringt, gegebenenfalls die Magnetteilchen magnetisch ausrichtet, durch Verdampfen meist großer Mengen von Lösungsmitteln physikalisch trocknet, die Oberfläche glättet und danach zum Erzielen von verschleißfesten Schichten gegebenenfalls chemisch vernetzt.

Im Falle besonders hochwertiger flexibler Aufzeichnungsträger bestehen diese Bindemittel überwiegend aus hochmolekularen zähen Thermoplasten, z. B. Polyurethanen, und thermisch wirkenden Vernetzern, z. B. mehrfunktionellen Isocyanaten. Die Trocknung und eine teilweise Härtung erfolgt hierbei unmittelbar nach dem Aufbringen der Schicht auf den Träger im Trockenofen. Die vollständige Aushärtung erfolgt langsam innerhalb einiger Tage bis Wochen. Solche für die Herstellung mechanisch beanspruchbarer magnetischer Aufzeichnungsträger ausgewählten Bindemittelsysteme bewirken zwar ausgezeichnete mechanische Eigenschaften der Magnetschichten, wie geringer Abrieb, gute Haftung zum Träger, Überstehen der vielfältigen Umlenkungen im Bandbetrieb ohne Bruch oder Verkleben, langer Lebensdauer auch unter verschiedenen klimatischen Bedingungen usw., sie bedingen jedoch auch einen hohen Aufwand bei der Fertigung.

So verlangen z. B. die hohen Molekulargewichte für die Verarbeitung eine hohe Lösungsmittelmenge. Ein weiterer Nachteil der Verwendung von hochmolekularen Thermoplasten ist die damit indirekt verbundene Verschlechterung der magnetischen Eigenschaften der magnetischen Materialien. Bei der Dispergierung werden zu einem gewissen Anteil nadelförmige Magnetteilchen zerrieben, was zu Bandrauschen und verschlechterter Kopierdämpfung führt. Einer rascheren und schonenderen Dispergierung wird seitens des Bindemittels wegen der hohen Molekulargewichte als Folge der Anforderungen nach höchster mechanischer Qualität eine gewisse Grenze gesetzt. Eine prinzipielle Grenze existiert auch bei der magnetischen Ausrichtung der Pigmente in der noch flüssigen Schicht kurz nach der Beschichtung. Das Bindemittel setzt dem Ausrichten einen Widerstand entgegen. Je besser die Ausrichtung, desto besser ist bei einem bestimmten Pigmenttyp und gegebener Pigmentkonzentration auch die Empfindlichkeit und Aussteuerbarkeit.

Die Verwendung von Isocyanaten zur thermischen Vernetzung der hochmolekularen Thermoplaste ist für die Herstellung der magnetischen Schichten ebenfalls mit Nachteilen bzw. einem hohen Aufwand verbunden. Als 2-Komponenten-System können jeweils nur kleinere Mengen angesetzt werden, um keine pot-life Probleme zu erhalten. Um eine gleichmäßige Produktion auf sehr hohem Niveau zu erreichen, müssen eine Vielzahl von Einflüssen im Produktionsablauf kontrolliert und in ihrem zeitlichen Ablauf genau gesteuert werden. Das Verfahren reagiert daher empfindlich auf auftretende Störungen, was zu Ausfällen führen kann.

Aus den EP-A-0 137 307, 0 137 308 und 0 141 147 ist bekannt, elektronenstrahlhärtbare Bindemittel auf der Basis von speziellen Polyurethanacrylatpolymeren zu verwenden, mit denen es möglich ist, Dispersionen magnetischer Teilchen zur Herstellung magnetischer Aufzeichnungsträger bereitzustellen, die bei erheblich verkürzter Dispergierzeit nur noch etwa die Hälfte der bei den heutigen qualitativ hochwertigsten Magnetaufzeichnungsträgern benutzten Lösungsmittelmengen benötigen im Vergleich zum Stand der Technik auf dem Gebiet elektronenstrahlhärtbarer Lackbindemittel nach der Härtung durch Bestrahlung der Bindemittel eine erheblich verbesserte mechanische Festigkeit der Schicht aufweisen und somit den besonderen Anforderungen für magnetische Aufzeichnungsträger genügen, wie sie bis dahin nur durch chemische Vernetzung hochmolekularer thermoplastischer Polymerer erfüllt werden konnten. Diese Polyurethanacrylate zeichnen sich durch eine breite Molekulargewichtsverteilung mit überwiegend höheren Molekulargewichten im Vergleich zu den bisher verwendeten elektronenstrahlhärtbaren Bindemitteln aus. Ihre Molekulargewichte sind im Vergleich zu den konventionellen Magnetbindemitteln jedoch niedriger. Diese Polyurethanacrylate sind linear aufgebaut und enthalten am Kettenende der Moleküle jeweils polymerisierbare Acrylesterdoppelbindungen. Sie benötigen zu ihrer Härtung bei einer nahezu vollständigen Vernetzung eine Elektronenstrahl-Energie-Dosis von ca. 50 bis 70 kGray. Dies erlaubt je nach Intensität der verwendeten Elektronenstrahlanlage Vorschubgeschwindigkeiten von etwa 40 bis 80 m/min. Für die Herstellung von magnetischen Aufzeichnungsträgern bei Produktionsgeschwindigkeiten von bis zu 200 m/min ist daher der Einsatz mehrerer hintereinanderliegender Strahlerköpfe nötig, was mit entsprechend hohen Investitionskosten verbunden ist.

Es wurde daher schon versucht, die elektronenstrahlhärtbaren Bindemittel im Hinblick auf eine möglichst niedrige Aushärtungsdosis und damit einer höheren Härtungsgeschwindigkeit zu verbessern. Es ist bekannt, höhere Härtungsgeschwindigkeiten durch den Einsatz von Verbindungen zu erzielen, die mehr als zwei Acrylesterdoppelbindungen im Molekül enthalten, wie z. B. Trimethylolpropantriacrylat und Pentaerythrittri- oder -tetraacrylat (S.P. Pappas, UV Curing: Science and Technology, u.a. Seiten 196/197, 1978, Technology Marketing Corp.).

Hierbei müssen jedoch meist Mengen von mehr als ca. 30 Gew.-% eingesetzt werden, damit für eine gute Durchhärtung nicht mehr als ca. 25 bis 40 kGray Bestrahlungsdosis benötigt werden. Eine weitere Möglichkeit ist der Einsatz verzweigter Präpolymerer mit drei und mehr Doppelbindungen pro Molekül bei Molekulargewichten von maximal 1000 bis 2000 (u.a. DE-OS-2 853 921, 3 005 036). Die Anwendung der bekannten Arten und Mengen verzweigter Monomerer und Präpolymerer zur Verbesserung der Reaktivität bzw. Verminderung der Aushärtungsdosis auf Bindemittel für magnetische Aufzeichnungsträger ergab aber eine Verschlechterung der Dehnbarkeit dieser Bindemittel, die in der Regel größer als 100 % sein sollte. Wider Erwarten verschlechterte sich sogar die Reißfestigkeit solcher Bindemittel, wenn versucht wurde, die Härte so einzustellen, daß noch eine möglichst hohe Dehnung erreicht werden konnte.

Aufgabe der Erfindung war es daher, magnetische Aufzeichnungsträger aus einem nichtmagnetischen Trägermaterial mit mindestens einer Magnetschicht, bestehend aus einer organischen Bindemittelmatrix mit darin feinverteiltem magnetischem Material, wobei die Bindemittelmatrix durch Elektronenstrahlhärtung einer Mischung aus 60 bis 100 Gew.-% eines Polyurethanacrylatpolymeren mit polymerisierbaren Acrylester-Doppelbindungen und 0 bis 40 % eines Acrylestermonomeren und/oder -präpolymeren und/oder N-Vinylmonomeren erhalten wird, darauf fortzubilden, daß unter Beibehaltung der Vorteile einer durch Elektronenstrahlhärtung gebildeten Bindemittelmatrix mit den sehr guten mechanischen und magnetischen Eigenschaften der resultierenden Aufzeichnungsträger sowie der für Magnetschichten erforderlichen hohen Elastizität dennoch eine höhere Härtungsgeschwindigkeit erzielt werden kann.

Es wurde nun gefunden, daß magnetische Aufzeichnungsträger der genannten Art den gestellten Anforderungen genügen, wenn das Polyurethanacrylatpolymere verzweigt ist und aus

1)  mindestens einem Diisocyanat,
2)  mindestens einem oligomeren oder polymeren Diol,
3)  mindestens einem niedermolekularen Diol,
4)  mindestens einem Monohydroxyalkylacrylat und
5)  mindestens einem niedermolekularen Triol

aufgebaut ist, wobei der Anteil der NCO-Gruppen des Diisocyanats 95 bis 105 % der äquivalenten Mengen an OH-Gruppen der Komponenten 2 bis 5 beträgt und die Molmengen der OH-gruppenhaltigen Komponenten derart bemessen sind, daß sich eine Konzentration von 2,4 bis 3,7 Mol Urethangruppen je Kilogramm Polyurethanacrylatpolymeres und eine mittlere Zahl von mehr als zwei und weniger als vier Acrylestergruppen pro Durchschnittsmolekül ergibt, mit der Maßgabe, daß das Molekulargewicht des Polymeren breit verteilt sind und im Zahlenmittel 2000 bis 10000 und das Verhältnis von Gewichtsmittel zu Zahlenmittel des Molgewichts 2,2 bis 3,5 beträgt.

Das allein oder zumindest vorwiegend die mittels Elektronenstrahlhärtung geformte Bindemittelmatrix der erfindungsgemäßen magnetischen Aufzeichnungsträger bildende Polyurethanacrylatpolymer enthält aufgrund seiner Herstellung sowohl Moleküle, die nur ein sehr niedriges Molekulargewicht aufweisen und im einfachsten Fall nur aus einem Diisocyanatmolekül und zwei Hydroxyalkylacrylatmolekülen entstanden sind, als auch Moleküle, die sehr hochmolekular, mit Molekulargewichten von über 100.000, aufgebaut sind. Daneben gibt es auch eine kleine Menge von Verbindungen, die nur eine Art Diol im Molekül enthalten und nicht verzweigt sind. Obwohl bei durchschnittlichen Molekulargewichten des Zahlenmittels von z. B. 6000 noch Molekulargewichte von ca. 110.000 bis 120.000 mittels Hochdruck-Gelchromatographie nachgewiesen werden konnten, so ist doch das Gewichtsmittel des gesamten Polyurethanacrylatgemisches deutlich niedriger und beträgt bei einem Zahlenmittel von etwa 5000 bis 6000 etwa 14.000 bis 18.000.

Mit der Größe des Molekulargewichts lassen sich sowohl mechanische Eigenschaften als auch Fließverhalten, Dispergierverhalten, Lösungsmittelbedarf und auch magnetische Eigenschaften in gewissen Grenzen beeinflussen. Die mechanischen Eigenschaften werden mit zunehmendem Molekulargewicht im allgemeinen besser. Für hohe Anforderungen an die Zähigkeit wie beispielsweise hochpigmentierte Magnetbänder sind Molekulargewichtszahlenmittel von etwa 5000 bis 8000 bevorzugt. Für starre und flexible Magnetplattenbeschichtungen mit vergleichsweise geringeren Anforderungen an die Elastizität und zum Teil höheren Anforderungen an das Fließverhalten oder die Abriebfestigkeit sind Molekulargewichte von etwa 2000 bis 6000 bevorzugt.

Zur Einstellung des Verzweigungsgrades dient ein Alkohol mit mehr als zwei Hydroxylgruppen im Molekül. Im einfachsten Fall werden aliphatische Triole wie Trimethylolpropan oder Glycerin eingesetzt, jedoch sind auch cyclische Triole gut geeignet. Ebenso sind mit Ethylenoxid oder Propylenoxid modifizierte Triole verwendbar.

Zur Steuerung der Doppelbindungsfunktionalität des Polyurethanacrylates dient das Äquivalentverhältnis von Triol zu Monohydroxyalkylacrylat. Bei einem Verhältnis von 1 : 1 erhält man statistisch verteilt ein Durchschnittsmolekül Polyurethanacrylat mit einem Verzweigungsgrad von drei und somit einem Molekül Triol und drei Acrylester-Doppelbindungen im Polymermolekül.

Durch Einführung der Verzweigung wird mit zunehmender Menge an Triol die Reaktivität verbessert. Es kommt dabei nicht auf eine exakte Stöchiometrie von Triol zu Hydroxyalkylacrylat an. Bei Verhältnissen von 0 bis 1 : 1 ergeben sich Gemische von Molekülen mit Verzweigungsgrad zwei mit solchen von drei. Bei Verhältnissen größer als 1 : 1 erhält man Gemische von Molekülen mit einer Funktionalität von drei und vier, wobei in kleineren Mengen statistisch auch kleinere und größere Verzweigungsgrade vorkommen.

3

Eine durchschnittliche Funktionalität von 2,5 bis 3,5 ist bevorzugt. Bei kleineren Werten ergibt sich der Anschluß in der Reaktivität zu den unverzweigten Polyurethanacrylaten. Bei größeren Werten findet keine weitere Verbesserung mehr statt, die mechanischen Eigenschaften sind nur noch schwierig auf hohem Niveau zu halten und je nach Molekulargewicht der ausgewählten anderen Hydroxylkomponenten können auch unerwünschte Molekulargewichtsvergrößerungen über den gewünschten optimalen berechneten Bereich hinaus, auftreten.

Um zu flexiblen und gleichzeitig reiß- wie abriebfesten Produkten zu gelangen, ist es nötig, Verzweigungsgrad und Molekulargewicht aufeinander abzustimmen. Der Verzweigungsgrad darf umso höher sein, je höher das Molekulargewicht gewählt wird. Die Menge an Hydroxalkylacrylat im Verhältnis zu den übrigen mehrfunktionellen Hydroxylkomponenten bestimmt dabei das resultierende Molgewicht.

Molekulargewicht und Funktionalität legen die Vernetzungskonzentration der Acrylesterdoppelbindungen, damit die Netzwerkdichte der bestrahlten und polymerisierten magnetischen Aufzeichnungsschicht und damit in entscheidendem Maße auch die maximal möglichen elastischen Eigenschaften fest.

Eine weitere Möglichkeit zur Steuerung der Netzwerkdichte ist der Zusatz von Verbindungen mit höheren Doppelbindungskonzentrationen in Form von Präpolymeren und Monomeren. Obwohl die genannten Polyurethanacrylate als Alleinbindemittel eingesetzt werden können, so ist die Mitverwendung von bis zu 40 Gew.-% an Präpolymeren und Monomeren gegebenenfalls zweckmäßig. Bei Anwendungen für Magnetbänder sind hierbei Mengen von 80 bis 95 % Polyurethanacrylat bevorzugt, bei Anwendungen mit weniger hohen Anforderungen an die Flexibilität sind 60 bis 85 % Polyurethanacrylat und der Rest zu 100 % Bindemittel an übrigen strahlungshärtbaren Komponenten bevorzugt.

Mit Hilfe des Zusatzes von Präpolymeren und Monomeren läßt sich die Reaktivität weiter steigern. Damit der gewünschte Effekt eintritt und möglichst keine Verschlechterung der mechanischen Eigenschaften resultiert, ist es notwendig, die Formulierung des Bindemittelgemisches entsprechend vorzunehmen.

Hohe mechanische Zähigkeit und hohe Reaktivität sind gleichzeitig möglich, wenn die Konzentration an Acrylesterdoppelbindungen, die in polyfunktionellen Verbindungen enthalten sind, für Magnetbandanwendungen im Bereich von 0,4 bis 1,5, vorzugsweise 0,6 bis 1,2 Mol Acrylesterdoppelbindungen pro kg Bindemittelgemisch beträgt und die Verteilung der Funktionalitäten der Doppelbindungen auf große und kleine Moleküle so gestaltet ist, daß das Zahlenmittel der Funktionalität zwischen 1,5 und 3 und das Verhältnis von Gewichtsmittel zu Zahlenmittel der Funktionalität zwischen 0,8 und 2,3, vorzugsweise zwischen 1,2 und 1,8 beträgt. Das Zahlenmittel darf dabei umso kleiner sein, je größer das Verhältnis von Gewichtsmittel zu Zahlenmittel ist.

Diese Verhältnisse lassen sich erreichen durch Verwendung von beispielsweise trifunktionellem Polyurethanacrylat, kleinen Mengen von unter 10 %, vorzugsweise unter 5 %, an stark vernetzenden Acrylatmonomeren wie Trimethylolpropanacrylat, bifunktionellen Acrylatpräpolymeren und/oder -monomeren sowie der Verwendung von kleinen Mengen bis 10 % an monofunktionellen Acrylat- oder N-Vinylmonomeren. Die Verwendung weniger stark vernetzender Präpolymerer und Monomerer ist für eine Steigerung der Härtungsgeschwindigkeit bzw. eine gute Durchhärtung mit sehr niedrigem Restmonomergehalt bei kleinen Härtungsdosen besonders günstig. Es ist daher auch möglich, mit kleineren Mengen von bis zu 10, maximal bis zu 15 % an bifunktionellen Monomeren noch rasch aushärtende flexible Beschichtungen zu erhalten.

Die aufgabengemäß geforderte rasche Aushärtung bei niedrigen Bestrahlungsdosen hängt sowohl von den genannten Einflußgrößen, wie Art der reaktiven Doppelbindungen und deren Verteilung auf Moleküle mit unterschiedlichem Molekulargewicht und Funktionalität, als auch von deren Beweglichkeit im sich bei der Bestrahlung ausbildenden Netzwerk ab. Diese Beweglichkeit wird beeinflußt durch Struktur und Zusammensetzung der ausgewählten Komponenten, der Reaktionstemperatur, Menge an Restlösungsmittel und Härte bzw. Glastemperatur oder E-Modul der Bindemittelformulierung.

Im Rahmen der Erfindung wird unter Aushärtung nicht die Umsetzung aller reaktiven Doppelbindungen, sondern das Erreichen eines Eigenschaftsniveaus verstanden, das sich bei weiterer Bestrahlung nicht mehr wesentlich ändert. Davon zu unterscheiden ist eine häufig mögliche noch kleinere Härtungsdosis, die trotz geringerer Aushärtung für die jeweilige Anwendung schon befriedigende anwendungstechnische Eigenschaften ergibt und daher üblicherweise angegeben wird. Die Anwendung solch niedriger Härtungsdosen kann jedoch unbefriedigend sein hinsichtlich eines größeren Gehalts an Restmonomeren und etwaigen Nachreaktionen und damit Eigenschaftsänderungen des fertigen Artikels bei der Alterung. Nachfolgend wird daher als benötigte Aushärtungsdosis immer eine Dosis im Sinne des Erreichens von mindestens 80 bis 90 % der mechanischen Endeigenschaften, wie zum Beispiel der Härte, als Anforderung definiert.

Gemäß der Erfindung lassen sich magnetische Aufzeichnungsträger mit einer guten Elastizität und hervorragenden mechanischen Eigenschaften auf der Basis elektronenstrahlhärtbarer Bindemittel mit einer Härtungsdosis herstellen, die nur 50 bis 70 % der bisher für mechanisch sehr anspruchsvolle Bindemittel benötigten Dosis beträgt und dabei mit weniger als 5 bis 10 % an tri- oder höherfunktionellen Monomeren oder Präpolymeren auskommt. In vielen Fällen lassen sich bereits ohne solche Verbindungen deutlich verbesserte Härtungsgeschwindigkeiten erreichen.

Um die erfindungsgemäßen magnetischen Aufzeichnungsträger mit guten mechanischen Eigenschaften zu erzielen, ist eine breite Verteilung der Molekulargewichte des Basispolymeren in Form des Polyurethanacrylats und ein im Vergleich zu üblichen elektronenstrahlhärtbaren Lacken relativ hohes durchschnittliches Molekulargewicht erforderlich. Ferner ist eine Mindestmenge an Urethangruppen für eine gute Zähigkeit nötig, die andererseits aus Gründen guten Fließverhaltens und sehr guter mechanischer Eigenschaften nicht zu hoch sein darf. Diese Eigenschaften lassen sich durch das Verhältnis von niedrigmolekularem zu polymerem Diol steuern. Da die Äquivalentgewichte der einzelnen Komponenten des Polyurethanacrylats sehr unterschiedlich ausgewählt werden können, ergibt sich eine breite Verteilung an Möglichkeiten zur Variation dieses Äquivalentverhältnisses. Das Verhältnis sollte so gewählt werden, daß nach Auswahl der Art der Komponenten im Polyurethanacrylat und Vorgabe eines Molekulargewichts und der Funktionalität eine Konzentration von Urethangruppen im Bereich von 2,4 bis 3,7 Mol pro Kilogramm, vorzugsweise von 2,7 bis 3,5 Mol pro Kilogramm, erhalten wird.

Mit zunehmender Urethankonzentration steigt die Härte bzw. die Glastemperatur bzw. der Elastizitätsmodul der bestrahlten und auspolymerisierten Produkte an, so daß je nach gewünschter Anwendung sowohl weichere Produkte für Magnetbänder als auch härtere Produkte für plattenförmige Magnetaufzeichnungsträger möglich sind.

Weitere Maßnahmen zur Variation der Härte sind die Auswahl von harten oder weichen Präpolymeren und/oder Monomeren bei der Formulierung des Gesamtbindemittels sowie die Variation der Vernetzungskonzentration hierfür im Rahmen des allgemeinen Standes der Technik.

Zur Herstellung der Polyurethanacrylatpolymeren geeignete Diisocyanate der Komponente 1 können aliphatischer, cycloaliphatischer oder aromatischer Natur sein, wie z. B. Hexamethylendiisocyanat, 2,2,4- bzw. 2,4,4-Trimethylhexamethylendiisocyanat, Isophorondiisocyanat, Bis-(4-isocyanato-cyclohexyl)-methan, Bis-(3-methyl-4-isocyanato-cyclohexyl)-methan, 2,2-Bis-(4-isocyanato-cyclohexyl)-propan, 4,4'-Diphenylmethandiisocyanat, 2,4- bzw. 2,6-Toluylendiisocyanat und 1,5-Naphthylendiisocyanat.

Diese Diisocyanate werden ausschließlich oder überwiegend als Isocyanatkomponente eingesetzt. Zum Aufbau verzweigter Polyurethanacrylatpolymere können statt der hierfür vorgesehenen Triole der Komponente (5) alternativ auch Isocyanate mit mehr als zwei Isocyanatgruppen im Molekül in kleiner Menge zusätzlich verwendet werden, um die benötigte Größe der Funktionalität, wie beschrieben, zu erhalten. Solche Isocyanate können z. B. Triisocyanate sein, die sich von den entsprechenden Aminen direkt ableiten, wie z. B. 1,6,11-Undecantriisocyanat gemäß der DE-OS-2 924 149 oder Bicyclo-(2.2.1)-heptantriisocyanate gemäß der DE-PS-2 515 485, 4-Isocyanatomethyl-1,8-octamethylendiisocyanat gemäß der DE-OS-3 109 276 oder Triisocyanate aromatischer Triamine.

Weitere Polyisocyanate sind solche, die sich aus den genannten Diisocyanaten durch Biuretisierung ableiten, wie z. B. des Hexamethylendiisocyanats mit Wasser usw., wie u.a. in den DE-PSen 1 101 394, 1 174 759, 1 931 055 beschrieben ist, solche die sich durch katalytische Trimerisierung eines Teils der Isocyanatgruppen zu Isocyanuratverbindungen herstellen lassen, z. B. aus Hexamethylendiisocyanat gemäß der DE-PS-1 201 992, den DE-OSen 1 644 809, 2 325 826, 2 724 914 und anderen, aus Isophorondiisocyanat (3-Isocyanatomethyl-3,5,5-trimethylcyclohexylisocyanat) gemäß der GB-PS-1 291 066 und DE-OS-2 325 826 oder analoge Isocyanuratgruppen aufweisende Polyisocyanate auf Basis von 1,4-Diisocyanatocyclohexan, 4,4'-Diisocyanatodicyclohexylmethan oder 2,4- bzw. 2,6-Toluylendiisocyanat.

Eine Verzweigung der Polyurethanacrylate läßt sich ferner durch Verwendung der Polyisocyanate aufbauen, die aus Diisocyanaten und Polyolen hergestellt wurden, insbesondere auf Basis von Toluylendiisocyanat, Trimethylolpropan und weiteren Alkoholen, z. B. gemäß der DE-PS-1 090 196.

Die oligomeren oder polymeren Diole (Komponente 2) weisen Molgewichte von 400 bis 2500, vorzugsweise von 700 bis 2000, auf. Kleinere Molgewichte bewirken eine schlechtere Mechanik, höhermolekulare Diole verschlechtern zum Teil das Fließverhalten. Molgewichte von 800 bis 1800 sind im allgemeinen bevorzugt. Es lassen sich aus der Chemie der elastomeren Polyurethan-Hochpolymeren bekannte Substanzen einsetzen. Hier sind zu nennen: Polyesterole, wie Adipate auf Basis von Glykolen, Polycaprolactone, Polyether und Polycarbonate. Polyether, wie z. B. Polytetrahydrofuran, Polypropylenglykol und andere eignen sich weniger als alleinige Polydiolkomponente, da sie zu weiche und stärker feuchtigkeitsempfindliche Produkte liefern und die Reibungswerte ungünstig beeinflussen. Sie sind daher im allgemeinen in Form von Mischungen mit anderen Polydiolen verwendbar, um Eigenschaften wie z. B. Dispergierverhalten oder Haftung zu modifizieren. Bevorzugte Polydiole sind Adipate mit Glykol (MG 2000), mit Diethylenglykol (MG 2000), mit Butandiol-1,4 (MG 900 bis 1100), mit Hexandiol-1,6 (MG 800 bis 2500) und 2,2-Dimethyl-1,3-propandiol (MG 900 bis 1100) sowie modifizierte Adipate dieser Diole, in denen bis zu 30 Mol.-% des aliphatischen Diols durch ein cyclisches Diol, wie auch hinsichtlich der Komponente (3) beschrieben, ersetzt ist. Weitere bevorzugte Polydiole sind Polycaprolactone (MG 830 und 2000) und Polycarbonate (MG 2000). Die genannten Molgewichte sollen nicht begrenzen, sondern sind nur als Beispiele für handelsübliche Polydiole gedacht, die im Rahmen der Erfindung erprobt wurden.

Die aufgeführten Polydiole werden zum Teil bereits auch als Komponenten in hochmolekularen, nicht weiter härtbaren Polyurethanbindemitteln für magnetische Aufzeichnungsträger benutzt. Im Gegensatz zu ihrer Anwendung in diesen Hochpolymeren dienen sie hier jedoch nicht zum Aufbau eines zweiphasigen Bindemittelsystems mit einer Weichphase und einer Hartphase sondern nur zum Aufbau des gewünschten breit verteilten Molekulargewichts und der Steuerung der Härte neben anderen Komponenten in einem einphasigen Bindemittelsystem mit nur einer Glasübergangstemperatur.

Als niedrigmolekulare Diole (Komponente 3) kommen Diole mit Molekulargewichten bis etwa 500, vorzugsweise kleiner als 320, in Frage. Als Beispiele seien genannt: Ethylenglykol, Propandiol-1,2, Propandiol-1,3, Butandiol-1,4, Hexandiol-1,6, Pentandiol-1,5, Decandiol, Methyl-1,3-propandiol, 2,2-Di-methyl-1,3-propandiol, 2,2-Di-methyl-1,4-butandiol, 2-Methyl-2-butyl-1,3-propandiol, Hydroxypivalinsäureneopentyl

5

glykolester, Diethylenglykol, Triethylenglykol, Tetraethylenglykol, Dipropylenglykol, Tripropylenglykol usw. Ferner kommen hierfür cyclische Diole in Frage, die bevorzugt verwendet werden, wie zum Beispiel 1,4-Dihydroxymethylcyclohexan, 4,4'-Dihydroxybis-cyclohexyl-methan, 3(4),8(9)-Dihydroxymethyltricyclo-(5.1.1.0)-decan, 1,4,3,6-Dianhydro-sorbitol, Anhydrosorbitol, oxethylierte oder oxpropylierte Derivate davon sowie oxethylierte oder oxpropylierte Bisphenole, wie z. B. vom Bisphenol-A.

Als Monohydroxyalkylacrylate (Komponente 4) werden Acrylsäureester mit Molekulargewichten von 116 bis ca. 350 eingesetzt, die sich formal aus Diolen oder Triolen und Acrylsäure ableiten, wie z. B. Hydroxyethylacrylat, 1,2-Hydroxypropylacrylat, 1,3-Hydroxypropylacrylat, 1,4-Butandiolmonoacrylat, Hexandiolmonoacrylat, n-Butylglycerinethermonoacrylat, 2-Ethylhexylglycerinethermonoacrylat, Versaticsäureglycerinestermonoacrylat. Diese Acrylsäureester lassen sich nach bekannten Verfahren entweder aus den entsprechenden Diolen durch Direktveresterung oder Umesterung herstellen bzw. in Form von 2-Hydroxyalkylacrylestern durch Umsetzung von Acrylsäure mit Epoxiden, Glycidylethern oder Glycidylestern, wie z. B. Ethylenoxid, Propylenoxid, Butylenoxid, n-Butylglycidylether, 2-Ethylhexylglycidylether oder Versaticsäureglycidylester, gewinnen (u.a. GB-PS-1 375 177).

Als Triole (Komponente 5) sind vorwiegend aliphatische Alkohole mit Molekulargewichten bis etwa 500, vorzugsweise kleiner als 300, zu nennen. Es kommen sowohl einfache Triole wie Trimethylolpropan, Hexantriol oder Glycerin, als auch oxethylierte oder oxpropylierte Derivate davon in Frage. Die Oxethylierung oder Oxpropylierung von Aminen führt ebenfalls zu geeigneten Triolen, wie beispielsweise Triethanolamin. Wegen der katalytischen Wirkung der Amine auf verschiedene Isocyanatreaktionen ist allerdings ein modifiziertes Herstellungsverfahren nötig. Ferner kommen in Frage alicyclische oder heterocyclische Triole, wie z. B. Trishydroxyethylisocyanurat (THEIC).

Das Triol läßt sich statt in reiner Form auch als Komponente in präpolymeren mehrfunktionellen Isocyanaten einsetzen, wie es für handelsübliche Isocyanatvernetzer bei 2-Komponenten-Polyurethanlacken verwendet wird

Der Aufbau der Verzweigung des Polyurethanacrylats mit Hilfe von Triolen ist wegen der besseren und einheitlicheren Definition der Funktionalität in den Alkoholen einfacher zu kontrollieren als bei Verwendung von Polyisocyanaten und daher bevorzugt. Gegebenenfalls erscheint es im Rahmen der Erfindung zweckmäßig Tetraole und Pentole in kleinen Mengen einzusetzen, wie z. B. Erythrit, Pentaerythrit, Arabit, Adonit, Xylit usw.

Die Polyurethanacrylatpolymeren werden vorwiegend in Lösung hergestellt. Als Lösungsmittel kommen solche Lösungsmittel in Frage, die frei sind von Gruppen, die mit Isocyanaten reagieren können, wie z. B. Ketone, Ether und Ester, gegebenenfalls auch aromatische oder chlorierte Kohlenwasserstoffe und Mischungen davon. Aceton, Methylethylketon, Tetrahydrofuran, Dioxan und Ethylacetat, Methylenchlorid sind bevorzugt. Es lassen sich jedoch auch alle übrigen Lösungsmittel, wie sie heute zur Herstellung von magnetischen Aufzeichnungsträgern unter Verwendung von hochmolekularen thermoplastischen Hochpolymeren verwendet werden, in untergeordneter Menge zur Steuerung bestimmter Eigenschaften, wie z. B. Fließeigenschaften mitverwenden. Bei Verwendung von Ethern ist auf Peroxidfreiheit zu achten, damit keine vorzeitige Polymerisation der Acrylesterdoppelbindungen eintritt.

Bei Molekulargewichten bis ca. 2000 können die Polyurethanacrylatpolymeren auch lösungsmittelfrei hergestellt werden. Dies kann zweckmäßig sein, z. B. wenn nicht sofort weiterverarbeitet wird, sondern eine längere Zwischenlagerung oder ein größerer Transport vorgesehen ist.

Die Umsetzung der Isocyanatgruppen mit den Hydroxylgruppen läßt sich im bevorzugten Temperaturbereich auch ohne Katalysator durchführen. Da die Reaktionen bei hohen Umsätzen ohne Verwendung von Überschüssen einer Reaktionskomponente sehr langsam wird, ist der Einsatz von Katalysatoren günstiger. Es sind aus der Polyurethanchemie bekannte Katalysatoren, die hier zum Einsatz kommen können wie tert. Amine, Metallsalze von Fettsäuren und andere org. Metallverbindungen. Vorzugsweise werden solche Katalysatoren ausgewählt, die überwiegend die Urethanbildung katalysieren und Reaktionen wie Allophanatbildung oder Isocyanuratisierung möglichst wenig begünstigen. Verbindungen des vierwertigen Zinns, wie Dibutylzinndilaurat sind besonders gut geeignet. Im allgemeinen hat es sich als zweckmäßig erwiesen, 0,005 bis 0,3, vorzugsweise 0,01 bis 0,15 Gewichtsteile für jeweils 100 Gewichtsteile Polyurethanacrylat zu verwenden. Der Katalysator kann zu Beginn der Reaktion mit vorgelegt werden, mit dem Zulauf allmählich dem Reaktionsgemisch zugeführt werden oder auch erst in der Nachrührphase zugegeben werden.

Außer dem Polyurethanacrylatpolymeren enthalten die erfindungsgemäßen Bindemittel vorzugsweise weitere strahlungshärtbare Komponenten in Form von relativ niedrigmolekularen und im Molekulargewicht meist auch eng verteilten präpolymeren Harzen und/oder Monomeren. Solche polymerisierbaren Verbindungen sind bekannter Stand der Technik auf dem Gebiet der mit UV-Licht oder Elektronenstrahlen härtbaren Beschichtungsmassen. U.a. sei auf die DE-OSen 2 049 714, 2 049 715, 2 064 701, 2 232 822, 2 249 446, 2 358 948, 2 441 148, 2 452 322, 2 636 425 und 2 636 426 verwiesen, bei denen solche strahlungshärtbaren Komponenten für andere Anwendungen wie Lacke, Druckfarben, Photoresists usw. beschrieben sind.

Von den vielen hier aufgeführten Substanzen eignen sich zur Anwendung für magnetische Aufzeichnungsträger vor allem jene Produkte, die als radikalisch polymerisierbare Doppelbindungen Acryl-Doppelbindungen oder N-Vinyl-Doppelbindungen im Molekül enthalten.

Statt der Acrylverbindungen lassen sich auch Methacrylverbindungen einsetzen. Wegen ihrer deutlich kleineren Polymerisationsgeschwindigkeit sollten sie jedoch höchstens in geringem Umfang, kombiniert mit Acrylverbindungen, verwendet werden. N-Vinyl-Doppelbindungen enthaltende Verbindungen sind in einer solchen Menge einzusetzen, daß, bezogen auf die Gesamtkonzentration aller polymerisierbaren Doppelbindungen, auf die N-Vinyl-Doppelbindungen nicht mehr als 50 Mol%, vorzugsweise nicht mehr als 40 Mol% entfallen.

Für die Auswahl dieser, mit dem Polyurethanacrylatpolymeren bei Elektronenbestrahlung copolymerisierenden Verbindungen kommen hauptsächlich Präpolymere mit zwei oder mehr polymerisierbaren Doppelbindungen im Molekül und mit Molekulargewichten kleiner als 1500, vorzugsweise 500 bis 1100 in Frage. Dies sind mono-, bi- oder trifunktionelle Acrylester mit Molekulargewichten größer als 180, vorzugsweise von 220 bis 400, in Form von Derivaten einfacher aliphatischer, cycloaliphatischer oder aliphatisch-aromatischer Alkohole und Modifikationen davon, ferner monofunktionelle N-Vinylmonomere in Form von N-Vinyllactamen oder N-Vinylurethanen aus N-Vinylisocyanat und monofunktionellen Alkoholen.

Im einzelnen sind dies Epoxidharzacrylate als Umsetzungsprodukte von Epoxidharzen mit Acrylsäure, gegebenenfalls zusätzlich modifiziert mit weiteren gesättigten Mono- oder Dicarbonsäuren, auch Fettsäuren, bevorzugt sind die Umsetzungsprodukte mit Bisphenol-A-Epoxidharzen. Weitere präpolymere Produkte sind Polyesteracrylate, hergestellt aus hydroxylgruppenhaltigen Polyestern von aliphatischen und/oder cycloaliphatischen bzw. aliphatisch-aromatischen Diolen, gegebenenfalls in Kombination mit Triolen, und gesättigten Dicarbonsäuren, verestert mit Acrylsäure. Als präpolymere Urethanacrylate kommen in Frage die bekannten, im Molekulargewicht eng verteilten Umsetzungsprodukte von Di- oder Polyisocyanaten mit Hydroxyalkylacrylaten, die auch mit einzelnen Diolen oder Triolen kettenverlängert sein können und in der Regel nur ein bis drei Isocyanatmoleküle im Urethanacrylatmolekül eingebaut enthalten.

Als Acrylester-Monomere lassen sich monofunktionelle Monomere heranziehen, wie z. B. Acrylsäureester, ethoxylierte Phenole und deren Methyl- oder Methoxy-substituierten Derivate, wie Phenoxyethylacrylat, o- oder p-Kresoxiethylacrylat, 2,3-Dimethylphenoxyethylacrylat, 3,5-Dimethylphenoxyethylacrylat oder Acrylsäureester von Derivaten des Benzylalkohols, wie z. B. 2-(2,5-Dimethylphenyl)-ethylacrylat, 2-(o-Methylphenyl)-ethylacrylat, 2-(p-Methylphenyl)-ethylacrylat. Weitere Monomere sind Isobornylacrylat, Dicyclopentadienyloxyethylacrylat, 4-tert.-Butylcyclohexylacrylat. Bevorzugt sind wegen des im allgemeinen günstigeren und geringeren Geruchs und geringeren Dampfdruckes die Acrylsäureester mit Molgewichten von über 200, besonders über 220.

Als Acrylsäureester mit mehr als einer Doppelbindung im Molekül sind zu nennen die Veresterungsprodukte von Diolen oder Triolen, wie sie auch als Komponenten (3) und (5) zum Aufbau der Polyurethanacrylatpolymeren Verwendung finden, mit Acrylsäure. Beispiele hierfür sind Hexandioldiacrylat, Neopentylglykoldiacrylat, Triethylenglykoldiacrylat, Tetraethylenglykoldiacrylat, Tripropylenglykoldiacrylat, Trimethylolpropantriacrylat, Hexantrioltriacrylat, Cyclohexandioldiacrylat, Diacrylat des ethoxylierten Bisphenol-A, Diacrylat des hydrierten Bisphenol-A.

Als N-Vinylmonomere sind hauptsächlich zu nennen N-Vinylpyrrolidon, N-Vinylimidazol, N-Vinylcaprolactam, die Umsetzungsprodukte von N-Vinylisocyanat mit Ethyldiglykol, Phenylglykol oder alkylsubstituierten Phenylglykolen oder Benzylalkoholen. Von den N-Vinyllactamen ist N-Vinylcaprolactam besonders bevorzugt wegen seiner geringeren Wasserlöslichkeit und damit Feuchtigkeitsunempfindlichkeit damit hergestellter Magnetaufzeichnungsschichten.

Als modifizierte monofunktionelle Acrylester sind zu nennen die Umsetzungsprodukte der Monohydroxyalkylacrylate, wie sie auch zur Herstellung der Polyurethanacrylatpolymeren verwendet werden, mit monofunktionellen Isocyanaten, wie Methyl-, Propyl-, Isopropyl-, n-Butyl- oder Phenylisocyanat.

Die Herstellung des kompletten Bindemittelgemisches für die Bindemittelmatrix der erfindungsgemäßen magnetischen Aufzeichnungsträger erfolgt durch einfaches Abmischen der Einzelkomponenten.

Neben den strahlungshärtbaren Komponenten können in untergeordnetem Maße noch höhermolekulare thermoplastische Magnetbindemittel nach dem Stand der Technik als nichtreaktive Komponente zugesetzt werden, um einzelne Eigenschaften wie z. B. Haftung oder Reibungskoeffizienten zu optimieren. Im allgemeinen führt dies aber bei den besonders vorteilhaften Eigenschaften dieser Erfindung, wie sehr rasche und schonende Dispergierung, hohe Lösungsmitteleinsparung und überragende magnetische Eigenschaften wie hoher Richtfaktor, hohe Remanenz und erhöhte Aussteuerbarkeiten, zu Einbußen.

Wegen der stark polaren Natur dieser Bindemittel treten häufig auf bestimmten Substraten Benetzungs- und Verlaufsprobleme auf. Üblicherweise werden deshalb den bekannten strahlungshärtbaren Überzugsmittel Verlaufshilfsmittel auf Basis von z. B. org. Fluoroligomeren, Siloxanen usw. zugesetzt. Besonders bevorzugt sind hier handelsübliche fluororganische Hilfsmittel in Mengen von 0,1 bis 0,5 Gew.-%, bezogen auf Bindemittelgemisch ohne Lösungsmittel.

Die Herstellung der erfindungsgemäßen magnetischen Aufzeichnungsträger erfolgt in an sich bekannter Weise. Hierzu wird das magnetische Material, Gamma-Eisen(III)oxid, feinteiliger Magnetit, ferromagnetisches undotiertes oder dotiertes Chromdioxid, kobaltdotiertes Gamma-Eisen(III)oxid, Bariumferrit oder feinteilige ferromagnetische Metalle und Metallegierungen, wie z. B. Fe-Co, Co-Ni, Fe-Co-Ni, Fe-Co-B, Fe-Co-Cr-B, Mn-Bi, Mn-Al, Fe-Co-V usw. in einer Lösung der elektronenstrahlhärtbaren Bindemittel in einem organischen Lösungsmittel, unter Verwendung sonstiger üblicher Hilfsmittel, in einer Dispergiereinrichtung zu einer Dispersion verarbeitet. Die Magnetdispersion wird nun mit Hilfe von Beschichtungsmaschinen wie z. B. eines Linealgießers, einer Walzen- oder Reverse-Roll-Auftragsvorrichtung oder einer Düsenbeschichtungsmaschine, auf den nichtmagnetischen Träger aufgetragen. Als nichtmagnetische Träger lassen sich die üblichen Trägermaterialien verwenden, insbesondere Polyesterfolien von 6 bis 75 μm Dicke oder Aluminiumplatten. Auch die Verwendung von Polyimidfolien ist für spezielle Anwendungen möglich.

Bevor die noch flüssige Beschichtungsmischung auf dem Träger getrocknet wird, was zweckmäßigerweise bei Temperaturen von 50 bis 100°C während 15 bis 120 Sekunden in einem konventionellen Ofen-Trockner geschieht, werden die Magnetteilchen gegebenenfalls durch Einwirkung eines Magnetfeldes entlang der vorgesehenen Aufzeichnungsrichtung orientiert. Daran kann sich gegebenenfalls eine sehr schwache Anpolymerisation der Beschichtung mit Elektronenstrahlen unter Verwendung einer Dosis von weniger als 6 kGray, vorzugsweise weniger als 2 kGray oder auch mit UV-Licht anschließen. In letzterem Fall ist zusätzlich die Verwendung eines üblichen hochabsorbierenden Photoinitiators nötig. Danach werden die Magnetschichten auf üblichen Maschinen durch Hindurchführen zwischen geheizten und polierten Walzen, gegebenenfalls bei Anwendung von Druck und Temperaturen von 30 bis 80°C, vorzugsweise 50 bis 70°C, geglättet und verdichtet.

Hierbei genügen vorteilhafterweise mildere Bedingungen als bei herkömmlichen bandförmigen Aufzeichnungsträgern. Die Dicke der Magnetschicht beträgt nun im allgemeinen 0,5 bis 20 µm, vorzugsweise 5 bis 10 µm bei Bändern bzw. 0,5 bis 3 µm bei scheibenförmigen Aufzeichnungsträgern.

Die Aushärtung der magnetischen Aufzeichnungsschicht erfolgt mittels beschleunigter Elektronen. Das Verfahren hierzu ist das bei anderen Beschichtungsverfahren übliche. Es kommen Elektronenbeschleuniger mit 150 bis 300 kV Beschleunigungsspannung in Frage. Sowohl Scanner- als auch Linear- oder Planarkathodenanlagen mit Bestrahlungsleistungen von mehr als 500, vorzugsweise mehr als 1000 kGray/sec sind geeignet. Die Bestrahlungszeit bzw. Bandgeschwindigkeit wird dabei so reguliert, daß die Magnetbeschichtung mit einer Energiedosis von 15 bis 90 kGray, vorzugsweise 25 bis 60 kGray, bestrahlt wird. Der für eine optimale Auspolymerisation der Doppelbindungen nötige Dosiswert liegt am häufigsten bei etwa 30 bis 45 kGray für gleichzeitig mechanisch hochwertige Bindemittel. Bei Magnetbandanwendungen können niedrigere, bei Plattenanwendungen höhere Härtungsdosen vorteilhaft sein.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht. Äquivalentangaben über die Komponenten im Polyurethanacrylat sind aus Gründen der Vergleichbarkeit auf eine Summe von 10 Äquivalenten Hydroxyl normiert.

## Beispiele

Herstellung und Prüfung von Polyurethanacrylatpolymeren und daraus hergestellten Bindemitteln

Die in den nachfolgenden Beispielen angegebenen Mengen der das Polyurethanacrylat aufbauenden Komponenten wurde nach folgendem allgemeinen Schema umgesetzt:

In einem trockenen Rührgefäß mit Zulaufeinrichtung und Rückflußkühler werden sämtliche Hydroxyl-Verbindungen zusammen mit dem Lösungsmittel vorgelegt und zur Stabilisierung gegen vorzeitige Polymerisation der Acrylsäureester-Doppelbindungen jeweils 1000 ppm, bezogen auf Hydroxyl-plus Isocyanatverbindungen, 2,6-Di-tert.-butyl-p-kresol und Tris(n-cyclohexyl-diazoniumdioxy)aluminium sowie als Katalysator 1000 ppm Dibutylzinndilaurat hinzugefügt.

Der Ansatz wird unter einer Atmosphäre trockenen Stickstoffs auf 50°C aufgeheizt. Man beginnt mit dem Zulauf des Isocyanats bzw. bei festen Isocyanaten mit einer Lösung des Isocyanats und stellt dann unter Rühren und Kühlen eine Reaktionstemperatur von ca. 60 bis 65°C ein. Für den Zulauf werden ca. 30 bis 60 Minuten bei den nachfolgend beschriebenen Ansatzgrößen benötigt. Zur Herstellung im Tonnenmaßstab kann die Zulaufzeit auf 2 bis 3 Stunden erhöht werden. Man rührt nach Zulaufende etwa 4 bis 6 Stunden bei dieser Reaktionstemperatur weiter, bis ein Restisocyanatgehalt von weniger als 0,1 Gew.-% NCO, bezogen auf Festprodukt, erreicht ist.

Dem Ansatz werden zum Schluß 3000 ppm eines fluororganischen Oligomeren als Verlaufshilfsmittel zugesetzt und die erhaltene Polymerlösung über einen 5 µm Filter filtriert.

Die Berechnung der in den Beispielen angegebenen Kennzahlen hinsichtlich Molekulargewicht, Vernetzungs- und NH-Konzentration basieren auf der Verwendung analytisch gewonnener Kennzahlen für die Einsatzstoffe wie Doppelbindungswert aus der Hydrierung, Isocyanatgehalt und Hydroxylzahl. Die Funktionalitätsangaben sind die theoretisch errechneten für die idealen angenommenen Strukturen der Verbindungen, die der Wirklichkeit ziemlich nahe kommen, sich praktisch jedoch nicht oder nur mit sehr hohem Aufwand genau bestimmen lassen. Für die Umsetzung der Komponenten wurden ebenfalls ideale Bedingungen unterstellt, die in der Praxis wegen geringem Umfang vorhandener Nebenreaktionen oder Störreaktionen, z. B. durch schwankende Spurenmengen an Wasser, nur angenähert erfüllt sind. Vor allem Vernetzungskonzentration und das Molekulargewicht des Polyurethanacrylatpolymeren können daher von den berechneten Werten mit 10 bis 20 % Fehler abweichen.

Die Größe und Verteilung des tatsächlichen Molekulargewichts wurde in Einzelfällen durch verschiedene Methoden ermittelt. Sie entspricht etwa den bereits zitierten linearen Polyurethanacrylatsystemen. Als Maß für das Molekulargewicht dient nachfolgend der einfacher zu bestimmende K-Wert nach Fikentscher. Für den möglichen Molekulargewichtsbereich sind K-Werte (3 %-ig in THF) von 17 bis 40 äquivalent, vorzugsweise 28 bis 36 für flexible und 19 bis 25 für starre Aufzeichnungsträger.

Zur Prüfung der Härtungsgeschwindigkeit und der mechanischen Eigenschaften wurden Beschichtungen der Bindemittel mit einer Trockenfilmdicke von 50 bis 70 µm hergestellt, wobei das Lösungsmittel durch Ablüften über Nacht und eine Stunde im Vakuum, jeweils bei Raumtemperatur, entfernt wurde. Danach erfolgte die Elektronenbestrahlung unter Stickstoff mit einem Restsauerstoffgehalt von weniger als 200 ppm mit einer Beschleunigungsspannung von 175 kVolt auf einer Linearkathodenanlage vom Typ CB 150/15/10 der Firma Energy Sciences Inc., USA.

Zur Bestimmung der Härtungsgeschwindigkeit wurden die Vorschubgeschwindigkeiten so ausgewählt, daß eine Bestrahlungsreihe mit Härtungsdosen von jeweils 10, 20, 30, 50, 70, 100 und 150 kGray resultierte.

Die bestrahlten Filme wurden für eine eventuelle geringfügige Nachhärtung 1 Tag offen gelagert und zur Entfernung geringer Mengen an Restlösungsmittel eine Stunde bei 100°C im Vakuum getempert.

Von den Bindemittelfilmen auf Glas wurde direkt die Pendelhärte nach König bei 23 C nach DIN 53157 bestimmt und nach graphischem Auftragen der Pendelhärtewerte als Funktion der Härtungsdosis diejenigen Härtungsdosen ermittelt, bei denen 80 bzw. 90 % der Pendelhärte erreicht wird, die man bei Bestrahlung mit einer Dosis mit 150 kGray erzielt. Mit ca. 80 bis 90 % der "Endhärte" liegt im allgemeinen ein gut durchpolymerisiertes Material vor.

In den nachfolgenden Beispielen wird die jeweils angegebene Härtungsdosis im Sinne dieser Definition als 80 bzw. 90 % Dosis verstanden. Andere Meßmethoden der Härte können zu etwas anderen Werten für die Härtungsgeschwindigkeit bzw. Härtungsdosen führen.

Zur Prüfung mechanischer Daten wie Reißfestigkeit, Reißdehnung oder Elastizitätsmodul wurden die bestrahlten Filme vorsichtig von der Glasplatte mit Hilfe eines Trennmessers entfernt. Bei Verwendung eines fluororganischen Verlaufshilfsmittels ließen sich die Filme im allgemeinen ohne Probleme ablösen. In Einzelfällen ist eine Präparation freier Filme durch Beschichten auf Aluminiumfolie mit nachfolgendem Auflösen des Aluminiums mit verdünnter Natronlauge möglich.

Die mechanischen Eigenschaften wurden an den freien Filmen in verschiedenen Zug-Prüfungsverfahren ermittelt.

Der Elastizitätsmodul wurde nach DIN 53457 meist als Sekantenmodul bei 0,1 % Dehnung bei 23°C bestimmt.

Die Prüfung der Reißfestigkeit und der Reißdehnung erfolgte nach DIN 53504 ebenfalls bei 23°C.

**Beispiel 1**

Es wurde ein Polyurethanacrylat = PUA 1 berechnet mit folgenden Kenndaten:

| | |
|---|---|
| Molekulargewicht (Zahlenmittel) | : 6000 |
| Acryl.-Funktionalität (Zahlenmittel) | : 3 |
| Vernetzungskonz. (Mol Acryl./kg) | : 0,5 |
| NH-Gruppenkonz. (Mol NH/kg) | : 3,1 |

| Komponente im PUA | | Äquivalentverhältnis | Ansatzmenge (Gramm) |
|---|---|---|---|
| 1) Isocyanat | : TDI 80 | 10,00 | 404,6 |
| 2) polymeres Diol | : PBA 510 | 2,86 | 677,3 |
| 3) einfaches Diol | : Dianol | 3,90 | 286,2 |
| 4) OH-Alkylacrylat | : HPA | 1,62 | 98,1 |
| 5) Triol | : TMP | 1,62 | 33,8 |

Das Produkt wurde als 60 %-ige Lösung in Tetrahydrofuran hergestellt. K-Wert (3 %-ig in THF) nach Fikentscher: 32,4

Aus dem Polyurethanacrylat PUA 1 wurde durch Abmischen ein Bindemittel BM 1 berechnet und hergestellt mit folgenden Kenndaten:

Zusammensetzung:

| | | |
|---|---|---|
| 87,2 Gew.-% PUA 1 | Vernetzungskonz. (Mol Acryl./kg) | : 0,85 |
| 4,6 Gew.-% TMPTA | Funktionalität (Zahlenmittel N) | : 1,78 |
| 8,2 Gew.-% VCp | Funktionalität (Gewichtsmittel W) | : 2,87 |
| | Funktionalität W/N | : 1,61 |

Die Elektronenstrahlhärtung ergibt:

80 % Dosis: 10 kGray
90 % Dosis: 21 kGray

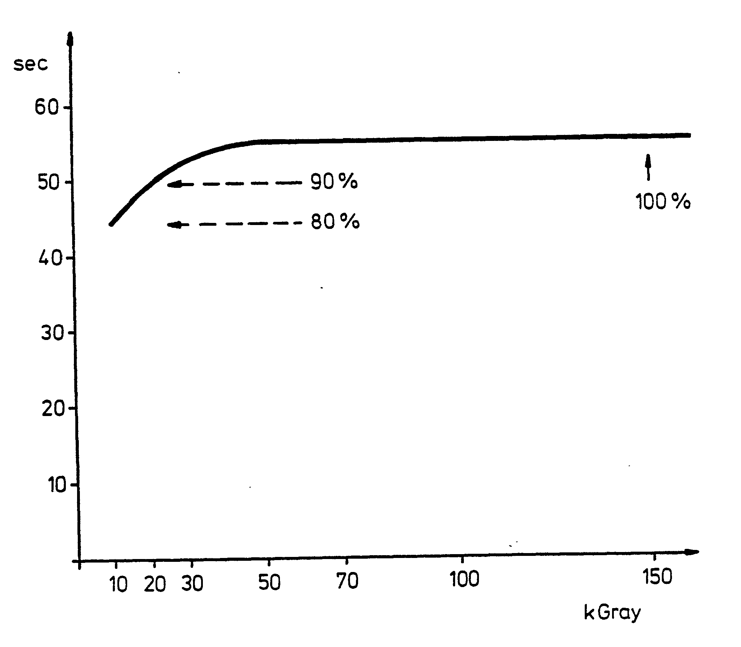

Figur 1 gibt die Pendelhärte nach König (in sec) als Funktion der Bestrahlungsdosis (in kGray) wieder und dient zur Verdeutlichung der Bestimmung der Härtungsdosen als 80 bzw. 90 % Dosis.

## EP 0 161 536 B1

Mechanische Eigenschaften mit : 20    30    70 kGray

| | | | |
|---|---|---|---|
| Elastizitätsmodul (N/mm$^2$) | : 450 | 440 | 440 |
| Reißfestigkeit (N/mm$^2$) | : 40 | 41 | 470 |
| Reißdehnung (%) | : 110 | 96 | 106 |

Abkürzungen:

| | |
|---|---|
| TDI 80 | = 2,4- + 2,6-Toluylendiisocyanat 80 : 20 |
| PBA 510 | = Polybutandiol-1,4-adipat, OH-Äquiv.Gew. 510 |
| Dianol | = Bisethoxyliertes Bisphenol-A |
| TMP | = Trimethylolpropan |
| HPA | = 2-Hydroxypropylacrylat, Isomere 75 : 25 |
| TMPTA | = Trimethylolpropantriacrylat |
| VCp | = N-Vinylcaprolactam |

**Beispiel 2a**

Es wurde ein Polyurethanacrylat = PUA 2a berechnet mit folgenden Kenndaten:

| | |
|---|---|
| Molekulargewicht (Zahlenmittel) | : 6000 |
| Acryl.-Funktionalität (Zahlenmittel) | : 3 |
| Vernetzungskonz. (Mol Acryl./kg) | : 0,5 |
| NH-Gruppenkonz. (Mol NH/kg) | : 3,5 |

| Komponente im PUA | | Äquivalentverhältnis | Ansatzmenge (Gramm) |
|---|---|---|---|
| 1) Isocyanat | : TDI 80 | 10,00 | 456,8 |
| 2) polymeres Diol | : PBA 510 | 2,84 | 759,3 |
| 3) einfaches Diol | : CHDM | 4,16 | 157,2 |
| 4) OH-Alkylacrylat | : HEA | 1,50 | 91,5 |
| 5) Triol | : TMP | 1,50 | 35,3 |

Das Produkt wurde als 60 %-ige Lösung in Tetrahydrofuran hergestellt. K-Wert (3 %-ig in THF) nach Fikentscher: 28,8.

Aus dem Polyurethanacrylat PUA 2a wurde durch Abmischen ein Bindemittel BM 2a berechnet und hergestellt mit folgenden Kenndaten:

Zusammensetzung:

| | | |
|---|---|---|
| 88,8 Gew.-% PUA 2a | Vernetzungskonz. (Mol Acryl./kg) | : 0,85 |
| 11,2 Gew.-% EPA 520 | Funktionalität (Zahlenmittel N) | : 2,42 |
| | Funktionalität (Gewichtsmittel W) | : 2,89 |
| | Funktionalität W/N | : 1,19 |

Die Elektronenstrahlhärtung ergibt:

80 % Dosis: 24 kGray
90 % Dosis: 42 kGray

Mechanische Eigenschaften mit : 30    70 kGray

| | | |
|---|---|---|
| Elastizitätsmodul (N/mm$^2$) | : 228 | 104 |
| Reißfestigkeit (N/mm$^2$) | : 41 | 36 |
| Reißdehnung (%) | : 98 | 104 |

Abkürzungen:

| | |
|---|---|
| TDI 80 | = 2,4- + 2,6-Toluylendiisocyanat 80 : 20 |
| PBA 510 | = Polybutandiol-1,4-adipat, OH-Äquiv.Gew. 510 |
| CHDM | = Cyclohexan-1,4-dimethanol |

10

TMP = Trimethylolpropan
HEA = 2-Hydroxyethylacrylat
EPA 520 = Bisphenol-A-Epoxidharzacrylat, Mol.Gew. 520

**Beispiel 2b**

Es wurde ein Polyurethanacrylat = PUA 2b als Vergleich zu PUA 2a ohne Verzweigung berechnet mit folgenden Kenndaten:

| | |
|---|---|
| Molekulargewicht (Zahlenmittel) | : 6000 |
| Acryl.-Funktionalität (Zahlenmittel) | : 2,0 |
| Vernetzungskonz. (Mol Acryl./kg) | : 0,33 |
| NM-Gruppenkonz. (Mol NH/kg) | : 3,50 |

| Komponente im PUA | | Äquivalentverhältnis | Ansatzmenge (Gramm) |
|---|---|---|---|
| 1) Isocyanat | : TDI 80 | 10,00 | 456,8 |
| 2) polymeres Diol | : PBA 510 | 2,79 | 747,3 |
| 3) einfaches Diol | : CHDM | 6,20 | 234,2 |
| 4) OH-Alkylacrylat | : HEA | 1,01 | 61,8 |

Das Produkt wurde als 60 %-ige Lösung in Tetrahydrofuran hergestellt. K-Wert (3 %-ig in THF) nach Fikentscher: 28,9.

Aus dem Polyurethanacrylat PUA 2b wurde durch Abmischen ein Bindemittel BM 2b berechnet und hergestellt mit folgenden Kenndaten:

Zusammensetzung:

| 84,3 Gew.-% PUA 2b | Vernetzungskonz. (Mol Acryl./kg) | : 0,85 |
|---|---|---|
| 15,7 Gew.-% EPA 520 | Funktionalität (Zahlenmittel N) | : 2,00 |
| | Funktionalität (Gewichtsmittel W) | : 2,00 |
| | Funktionalität W/N | : 1,00 |

Die Elektronenstrahlhärtung ergibt folgende Unterschiede im Härtungsverhalten, wobei das Vergleichsbindemittel BM 2b mit Ausnahme der Verzweigung sonst gleichartig wie das Bindemittel BM 2a aufgebaut ist:

| | (Vergleich) BM 2b | BM 2a |
|---|---|---|
| 80 % Dosis: | 50 kGray | 24 kGray |
| 90 % Dosis: | 75 kGray | 42 kGray |

Abkürzungen:
TDI 80 = 2,4- + 2,6-Toluylendiisocyanat 80 : 20
PBA 510 = Polybutandiol-1,4-adipat, OH-Äquiv.Gew. 510
CHDM = Cyclohexan-1,4-dimethanol
HEA = 2-Hydroxyethylacrylat
EPA 520 = Bisphenol-A-Epoxidharzacrylat, Mol.Gew. 520

**Beispiel 3a**

Es wurde ein Polyurethanacrylat = PUA 3a berechnet mit folgenden Kenndaten:

| | |
|---|---|
| Molekulargewicht (Zahlenmittel) | : 6000 |
| Acryl.-Funktionalität (Zahlenmittel) | : 3 |
| Vernetzungskonz. (Mol Acryl./kg) | : 0,5 |
| NH-Gruppenkonz. (Mol NH/kg) | : 3,5 |

| Komponente im PUA | | Äquivalentverhältnis | Ansatzmenge (Gramm) |
|---|---|---|---|
| 1) Isocyanat | : TDI 80 | 10,00 | 456,8 |
| 2) polymeres Diol | : PBA 510 | 2,79 | 747,6 |
| 3) einfaches Diol | : CHDM | 4,33 | 163,7 |
| 4) OH-Alkylacrylat | : HPA | 1,44 | 98,1 |
| 5) Triol | : TMP | 1,44 | 33,8 |

Das Produkt wurde als 60 %-ige Lösung in Tetrahydrofuran hergestellt. K-Wert (3 %-ig in THF) nach Fikentscher: 32,2

Zusammensetzung:

| | | |
|---|---|---|
| 88,8 Gew.-% PUA 3a | Vernetzungskonz. (Mol Acryl./kg) | : 0,85 |
| 11,2 Gew.-% EPA 520 | Funktionalität (Zahlenmittel N) | : 2,42 |
| | Funktionalität (Gewichtsmittel W) | : 2,89 |
| | Funktionalität W/N | : 1,19 |

Die Elektronenstrahlhärtung ergibt:

80 % Dosis: 27 kGray
90 % Dosis: 45 kGray

| Mechanische Eigenschaften mit | : 30 | 70 kGray |
|---|---|---|
| Elastizitätsmodul (N/mm$^2$) | : 33 | 34 |
| Reißfestigkeit (N/mm$^2$) | : 37 | 43 |
| Reißdehnung (%) | : 168 | 148 |

Abkürzungen:

| | |
|---|---|
| TDI 80 | = 2,4- + 2,6-Toluylendiisocyanat 80 : 20 |
| PBA 510 | = Polybutandiol-1,4-adipat, OH-Äquiv.Gew. 510 |
| CHDM | = Cyclohexan-1,4-dimethanol |
| TMP | = Trimethylolpropan |
| HPA | = 2-Hydroxypropylacrylat, Isomere 75 : 25 |
| EPA 520 | = Bisphenol-A-Epoxidharzacrylat, Mol.Gew. 520 |

**Beispiel 3b**

Es wurde ein Polyurethanacrylat = PUA 3b als Vergleich zu PUA 3a ohne Verzweigung berechnet mit folgenden Kenndaten:

| | |
|---|---|
| Molekulargewicht (Zahlenmittel) | : 6000 |
| Acryl.-Funktionalität (Zahlenmittel) | : 2,0 |
| Vernetzungskonz. (Mol Acryl./kg) | : 0,33 |
| NH-Gruppenkonz. (Mol NH/kg) | : 3,50 |

| Komponente im PUA | | Äquivalentverhältnis | Ansatzmenge (Gramm) |
|---|---|---|---|
| 1) Isocyanat | : TDI 80 | 10,00 | 456,8 |
| 2) polymeres Diol | : PBA 510 | 2,77 | 740,6 |
| 3) einfaches Diol | : CHDM | 6,28 | 237,2 |
| 4) OH-Alkylacrylat | : HPA | 0,96 | 65,4 |

Das Produkt wurde als 60 %-ige Lösung in Tetrahydrofuran hergestellt. K-Wert (3 %-ig in THF) nach Fikentscher: 36,1

Aus dem Polyurethanacrylat PUA 3b wurde durch Abmischen ein Bindemittel BM 3b berechnet und hergestellt mit folgenden Kenndaten:

Zusammensetzung:

| 84,3 Gew.-% PUA 3b | Vernetzungskonz. (Mol Acryl./kg) | : 0,85 |
| 15,7 Gew.-% EPA 520 | Funktionalität (Zahlenmittel N) | : 2,00 |
| | Funktionalität (Gewichtsmittel W) | : 2,00 |
| | Funktionalität W/N | : 1,00 |

Die Elektronenstrahlhärtung ergibt folgende Unterschiede im Härtungsverhalten, wobei das Vergleichsbindemittel BM 3b mit Ausnahme der Verzweigung sonst gleichartig wie das Bindemittel BM 3a aufgebaut ist:

| | BM 3b | BM 3a |
| --- | --- | --- |
| 80 % Dosis: | 40 kGray | 27 kGray |
| 90 % Dosis: | 70 kGray | 45 kGray |

Abkürzungen:

| TDI 80 | = 2,4- + 2,6-Toluylendiisocyanat 80 : 20 |
| PBA 510 | = Polybutandiol-1,4-adipat, OH-Äquiv.Gew. 510 |
| CHDM | = Cyclohexan-1,4-dimethanol |
| HPA | = 2-Hydroxypropylacrylat, Isomere 75 : 25 |
| EPA 520 | = Bisphenol-A-Epoxidharzacrylat, Mol.Gew. 520 |

## Beispiel 4a

Es wurde ein Polyurethanacrylat = PUA 4a berechnet mit folgenden Kenndaten:

| Molekulargewicht (Zahlenmittel) | : 6000 |
| Acryl.-Funktionalität (Zahlenmittel) | : 3 |
| Vernetzungskonz. (Mol Acryl./kg) | : 0,5 |
| NH-Gruppenkonz. (Mol NH/kg) | : 3,5 |

| Komponente im PUA | | Äquivalentverhältnis | Ansatzmenge (Gramm) |
| --- | --- | --- | --- |
| 1) Isocyanat | : TDI 80 | 10,00 | 456,8 |
| 2) polymeres Diol | : PBA 510 | 2,74 | 734,0 |
| 3) einfaches Diol | : CHDM | 4,28 | 161,8 |
| 4) OH-Alkylacrylat | : BMA | 1,49 | 112,7 |
| 5) Triol | : TMP | 1,49 | 35,0 |

Das Produkt wurde als 60 %-ige Lösung in Tetrahydrofuran hergestellt. K-Wert (3 %-ig in THF) nach Fikentscher: 27,9

Aus dem Polyurethanacrylat PUA 4a wurde durch Abmischen ein Bindemittel BM 4a berechnet und hergestellt mit folgenden Kenndaten:

Zusammensetzung:

| 95,9 Gew.-% PUA 4a | Vernetzungskonz. (Mol Acryl./kg) | : 0,85 |
| 4,1 Gew.-% TMPTA | Funktionalität (Zahlenmittel N) | : 3,00 |
| | Funktionalität (Gewichtsmittel W) | : 3,00 |
| | Funktionalität W/N | : 1,00 |

Die Elektronenstrahlhärtung ergibt:
80 % Dosis: 17 kGray
90 % Dosis: 28 kGray

| Mechanische Eigenschaften mit | : 30 | 70 kGray |
| --- | --- | --- |
| Elastizitätsmodul (N/mm$^2$) | : 70 | 82 |
| Reißfestigkeit (N/mm$^2$) | : 36 | 35 |
| Reißdehnung (%) | : 145 | 128 |

Abkürzungen:
TDI 80       = 2,4- + 2,6-Toluylendiisocyanat 80 : 20

PBA 510    = Polybutandiol-1,4-adipat, OH-Äquiv.Gew. 510
CHDM     = Cyclohexan-1,4-dimethanol
TMP       = Trimethylolpropan
BMA      = Butandiol-1,4-monoacrylat
TMPTA    = Trimethylolpropantriacrylat
VCp       = N-Vinylcaprolactam

## Beispiel 4b

Es wurde ein Polyurethanacrylat = PUA 4b als Vergleich zu PUA 4a ohne Verzweigung berechnet mit folgenden Kenndaten:

| | |
|---|---|
| Molekulargewicht (Zahlenmittel) | : 6000 |
| Acryl.-Funktionalität (Zahlenmittel) | : 2,0 |
| Vernetzungskonz. (Mol Acryl./kg) | : 0,33 |
| NH-Gruppenkonz. (Mol NH/kg) | : 3,50 |

| Komponente im PUA | | Äquivalentverhältnis | Ansatzmenge (Gramm) |
|---|---|---|---|
| 1) Isocyanat | : TDI 80 | 10,00 | 456,8 |
| 2) polymeres Diol | : PBA 510 | 2,73 | 731,0 |
| 3) einfaches Diol | : CHDM | 6,28 | 237,3 |
| 4) OH-Alkylacrylat | : BMA | 0,99 | 75,2 |

Das Produkt wurde als 60 %-ge Lösung in Tetrahydrofuran hergestellt. K-Wert (3 %-ig in THF) nach Fikentscher: 28,9

Aus dem Polyurethanacrylat PUA 4b wurde durch Abmischen ein Bindemittel BM 4b berechnet und hergestellt mit folgenden Kenndaten:

Zusammensetzung:

| 94,0 Gew.-% PUA 4b | Vernetzungskonz. (Mol Acryl./kg) | : 0,85 |
|---|---|---|
| 6,0 Gew.-% TMPTA | Funktionalität (Zahlenmittel N) | : 2,43 |
| | Funktionalität (Gewichtsmittel W) | : 2,06 |
| | Funktionalität W/N | : 0,85 |

Die Elektronenstrahlhärtung ergibt folgende Unterschiede im Härtungsverhalten, wobei das Vergleichsbindemittel BM 4b mit Ausnahme der Verzweigung sonst gleichartig wie das Bindemittel BM 4a aufgebaut ist:

| | BM 4b | BM 4a |
|---|---|---|
| 80 % Dosis: | 35 kGray | 17 kGray |
| 90 % Dosis: | 70 kGray | 28 kGray |

Abkürzungen:
TDI 80      = 2,4- + 2,6-Toluylendiisocyanat 80 : 20
PBA 510   = Polybutandiol-1,4-adipat, OH-Äquiv.Gew. 510
CHDM     = Cyclohexan-1,4-dimethanol
TMP       = Trimethylolpropan
BMA      = Butandiol-1,4-monoacrylat
TMPTA   = Trimethylolpropantriacrylat

## Beispiel 4c

Aus dem Polyurethanacrylat PUA 4a wurde durch Abmischen ein Bindemittel BM 4c berechnet und hergestellt mit folgenden Kenndaten:

14

Zusammensetzung:

| | | |
|---|---|---|
| 87,2 Gew.-% PUA 4a | Vernetzungskonz. (Mol Acryl./kg) | : 0,85 |
| 4,6 Gew.-% TMPTA | Funktionalität (Zahlenmittel N) | : 1,67 |
| 8,2 Gew.-% VCp | Funktionalität (Gewichtsmittel W) | : 2,84 |
| | Funktionalität W/N | : 1,70 |

Die Elektronenstrahlhärtung ergibt:
80 % Dosis: 13 kGray
90 % Dosis: 26 kGray

| Mechanische Eigenschaften mit | : 30 | 70 kGray |
|---|---|---|
| Elastizitätsmodul (N/mm$^2$) | : 352 | 426 |
| Reißfestigkeit (N/mm$^2$) | : 40 | 42 |
| Reißdehnung (%) | : 116 | 96 |

Abkürzungen:

| | |
|---|---|
| TDI 80 | = 2,4- + 2,6-Toluylendiisocyanat 80 : 20 |
| PBA 510 | = Polybutandiol-1,4-adipat, OH-Äquiv.Gew. 510 |
| CHDM | = Cyclohexan-1,4-dimethanol |
| BMA | = Butandiol-1,4-monoacrylat |
| TMPTA | = Trimethylolpropantriacrylat |

**Beispiel 5**

Es wurde ein Polyurethanacrylat = PUA 5 berechnet mit folgenden Kenndaten:

| | |
|---|---|
| Molekulargewicht (Zahlenmittel) | : 6000 |
| Acryl.-Funktionalität (Zahlenmittel) | : 3 |
| Vernetzungskonz. (Mol Acryl./kg) | : 0,5 |
| NH-Gruppenkonz. (Mol NH/kg) | : 3,5 |

| Komponente im PUA | | Äquivalentverhältnis | Ansatzmenge (Gramm) |
|---|---|---|---|
| 1) Isocyanat | : TDI 80 | 10,00 | 456,8 |
| 2) polymeres Diol | : PBA 510 | 2,92 | 781,1 |
| 3) einfaches Diol | : Hexandiol | 4,21 | 130,4 |
| 4) OH-Alkylacrylat | : HPA | 1,44 | 98,1 |
| 5) Triol | : TMP | 1,44 | 33,8 |

Das Produkt wurde als 60 %-ige Lösung in Tetrahydrofuran hergestellt. K-Wert (3 %-ig in THF) nach Fikentscher: 32,0

Aus dem Polyurethanacrylat PUA 5 wurde durch Abmischen ein Bindemittel BM 5 berechnet und hergestellt mit folgenden Kenndaten:

Zusammensetzung:

| | | |
|---|---|---|
| 81,3 Gew.-% PUA 5 | Vernetzungskonz. (Mol Acryl./kg) | : 0,85 |
| 10,5 Gew.-% DIANOLDA | Funktionalität (Zahlenmittel N) | : 1,53 |
| 8,2 Gew.-% VCp | Funktionalität (Gewichtsmittel W) | : 2,73 |
| | Funktionalität W/N | : 1,78 |

Die Elektronenstrahlhärtung ergibt:
80 % Dosis: 5 kGray
90 % Dosis: 15 kGray

| Mechanische Eigenschaften mit | : 30 | 70 kGray |
|---|---|---|
| Elastizitätsmodul (N/mm$^2$) | : 128 | 155 |
| Reißfestigkeit (N/mm$^2$) | : 38 | 48 |
| Reißdehnung (%) | : 106 | 100 |

Abkürzungen:

| TDI 80 | = 2,4- + 2,6-Toluylendiisocyanat 80 : 20 |
|---|---|
| PBA 510 | = Polybutandiol-1,4-adipat, OH-Äquiv.Gew. 510 |
| TMP | = Trimethylolpropan |
| HPA | = 2-Hydroxypropylacrylat, Isomere 75 : 25 |
| DIANOLDA | = Bisethoxyliertes Bisphenol-A-diacrylat |
| VCp | = N-Vinylcaprolactam |

## Beispiel 6

Es wurde ein Polyurethanacrylat = PUA 6 berechnet mit folgenden Kenndaten:

| Molekulargewicht (Zahlenmittel) | : 6000 |
|---|---|
| Acryl.-Funktionalität (Zahlenmittel) | : 3 |
| Vernetzungskonz. (Mol Acryl./kg) | : 0,5 |
| NH-Gruppenkonz. (Mol NH/kg) | : 3,1 |

| Komponente im PUA | | Äquivalentverhältnis | Ansatzmenge (Gramm) |
|---|---|---|---|
| 1) Isocyanat | : MDI/TDI 1 : 1 | 10,00 | 492,9 |
| 2) polymeres Diol | : PBA 510 | 3,29 | 780,2 |
| 3) einfaches Diol | : Hexandiol-1,6 | 3,46 | 95,0 |
| 4) OH-Alkylacrylat | : HPA | 1,62 | 98,1 |
| 5) Triol | : TMP | 1,62 | 33,8 |

Das Produkt wurde als 60 %-ige Lösung in Tetrahydrofuran hergestellt. K-Wert (3 %-ig in THF) nach Fikentscher: 33,7

Zusammensetzung:

| 87,0 Gew.-% PUA 6 | Vernetzungskonz. (Mol Acryl./kg) | : 0,85 |
|---|---|---|
| 6,3 Gew.-% DIANOLDA | Funktionalität (Zahlenmittel N) | : 1,57 |
| 6,7 Gew.-% VCp | Funktionalität (Gewichtsmittel W) | : 2,80 |
| | Funktionalität W/N | : 1,78 |

Die Elektronenstrahlhärtung ergibt:

80 % Dosis: 40 kGray
90 % Dosis: 66 kGray

| Mechanische Eigenschaften mit | : 30 | 70 kGray |
|---|---|---|
| Elastizitätsmodul (N/mm$^2$) | : 52 | 91 |
| Reißfestigkeit (N/mm$^2$) | : 37 | 42 |
| Reißdehnung (%) | : 116 | 128 |

Abkürzungen:

| MDI/TDI | = Diphenylmethandiisocyanat/Toluylendiisocyanat Gemisch 1 : 1 Äquivalente |
|---|---|
| PBA 510 | = Polybutandiol-1,4-adipat, OH-Äquiv.Gew. 510 |
| TMP | = Trimethylolpropan |
| HPA | = 2-Hydroxypropylacrylat, Isomere 75 : 25 |
| DIANOLDA | = Bisethoxyliertes Bisphenol-A-diacrylat |
| VCp | = N-Vinylcaprolactam |

**Beispiel 7**

Es wurde ein Polyurethanacrylat = PUA 7 berechnet mit folgenden Kenndaten:

Molekulargewicht (Zahlemmittel) : 6000
Acryl.-Funktionalität (Zahlemmittel) : 3
Vernetzungskonz. (Mol Acryl./kg) : 0,5
NH-Gruppenkonz. (Mol NH/kg) : 3,33

| Komponente im PUA | | Äquivalentverhältnis | Ansatzmenge (Gramm) |
|---|---|---|---|
| 1) Isocyanat | : TDI 80 | 10,30 | 434,0 |
| 2) polymeres Diol | : PCL 415 | 3,20 | 645,0 |
| 3) einfaches Diol | : Dianol | 3,70 | 283,2 |
| 4) OH-Alkylacrylat | : BMA | 1,55 | 104,3 |
| 5) Triol | : TMP | 1,55 | 33,6 |

Das Produkt wurde als 60 %-ige Lösung in Tetrahydrofuran hergestellt. K-Wert (3 %-ig in THF) nach Fikentscher: 32,6

Das Polyurethanacrylat PUA 7 wurde ohne weitere elektronenstrahlhärtbare Zusätze direkt als Bindemittel BM 7 eingesetzt:

Die Elektronenstrahlhärtung ergibt:

80 % Dosis: 46 kGray
90 % Dosis: 81 kGray

| Mechanische Eigenschaften mit | : 30 | 70 kGray |
|---|---|---|
| Elastizitätsmodul (N/mm²) | : 228 | 384 |
| Reißfestigkeit (N/mm²) | : 37 | 35 |
| Reißdehnung (%) | : 174 | 146 |

Abkürzungen:
TDI 80      = 2,4- + 2,6-Toluylendiisocyanat 80 : 20
PCL 415    = Polycaprolactondiol, OH-Äquiv.Gew. 415
Dianol     = Bisethoxyliertes Bisphenol-A
TMP        = Trimethylolpropan
BMA        = Butandiol-1,4-monoacrylat


**Beispiel 8**

Es wurde ein Polyurethanacrylat = PUA 8 berechnet mit folgenden Kenndaten:

Molekulargewicht (Zahlenmittel) : 6000
Acryl.-Funktionalität (Zahlenmittel) : 3
Vernetzungskonz. (Mol Acryl./kg) : 0,5
NH-Gruppenkonz. (Mol NH/kg) : 2,96

| Komponente im PUA | | Äquivalentverhältnis | Ansatzmenge (Gramm) |
|---|---|---|---|
| 1) Isocyanat | : TDI 80 | 10,00 | 386,1 |
| 2) polymeres Diol | : PHA 905 | 1,65 | 645,0 |
| 3) einfaches Diol | : Dianol | 4,86 | 331,2 |
| 4) OH-Alkylacrylat | : BMA | 1,74 | 104,3 |
| 5) Triol | : TMP | 1,74 | 33,6 |

Das Produkt wurde als 60 %-ige Lösung in Tetrahydrofuran hergestellt. K-Wert (3 %-ig in THF) nach Fikentscher: 31,6

Das Polyurethanacrylat PUA 8 wurde ohne weitere elektronenstrahlhärtbare Zusätze direkt als Bindemittel BM 9 eingesetzt:

Die Elektronenstrahlhärtung ergibt:

80 % Dosis: 41 kGray
90 % Dosis: 71 kGray

| Mechanische Eigenschaften mit | : 30 | 70 kGray |
|---|---|---|
| Elastizitätsmodul (N/mm²) | : 67 | 131 |
| Reißfestigkeit (N/mm²) | : 41 | 34 |
| Reißdehnung (%) | : 168 | 146 |

Abkürzungen:
TDI 80 = 2,4- + 2,6-Toluylendiisocyanat 80 : 20
PHA 905 = Polyhexandiol-1,6-adipat, OH-Äquiv.Gew. 905
Dianol = Bisethoxyliertes Bisphenol-A
TMP = Trimethylolpropan
BMA = Butandiol-1,4-monoacrylat

**Beispiel 9**

Es wurde ein Polyurethanacrylat = PUA 9 berechnet mit folgenden Kenndaten:

| | |
|---|---|
| Molekulargewicht (Zahlenmittel) | : 6000 |
| Acryl.-Funktionalität (Zahlenmittel) | : 3 |
| Vernetzungskonz. (Mol Acryl./kg) | : 0,5 |
| NH-Gruppenkonz. (Mol NH/kg) | : 2,66 |

| Komponente im PUA | | Äquivalentverhältnis | Ansatzmenge (Gramm) |
|---|---|---|---|
| 1) Isocyanat | : TDI 80 | 10,30 | 346,8 |
| 2) polymeres Diol | : PHA 905 | 2,22 | 776,6 |
| 3) einfaches Diol | : Dianol | 3,91 | 239,0 |
| 4) OH-Alkylacrylat | : BMA | 1,94 | 104,3 |
| 5) Triol | : IMP | 1,94 | 33,6 |

Das Produkt wurde als 60 %-ige Lösung in Tetrahydrofuran hergestellt. K-Wert (3 %-ig in THF) nach Fikentscher: 32,0

Aus dem Polyurethanacrylat PUA 9 wurde durch Abmischen ein Bindemittel BM 9 berechnet und hergestellt mit folgenden Kenndaten:

Zusammensetzung:

| 85,0 Gew.-% PUA 9 | Vernetzungskonz. (Mol Acryl./kg) | : 0,80 |
|---|---|---|
| 4,8 Gew.-% EPA 520 | Funktionalität (Zahlenmittel N) | : 1,62 |
| 4,8 Gew.-% TMPTA | Funktionalität (Gewichtsmittel W) | : 2,80 |
| 8,2 Gew.-% VCp | Funktionalität W/N | : 1,73 |

Die Elektronenstrahlhärtung ergibt:

80 % Dosis: 35 kGray
90 % Dosis: 53 kGray

| Mechanische Eigenschaften mit | : 30 | 70 kGray |
|---|---|---|
| Elastizitätsmodul (N/mm²) | : 116 | 168 |
| Reißfestigkeit (N/mm²) | : 29 | 32 |
| Reißdehnung (%) | : 100 | 84 |

Abkürzungen:
TDI 80 = 2,4- + 2,6-Toluylendiisocyanat 80 : 20
PHA 905 = Polyhexandiol-1,4-adipat, OH-Äquiv.Gew. 905
Dianol = Bisethoxyliertes Bisphenol-A
TMP = Trimethylolpropan
BMA = Butandiol-1,4-monoacrylat

## EP 0 161 536 B1

EPA 520 = Bisphenol-A-Epoxidharzacrylat, Mol.Gew. 520
TMPTA = Trimethylolpropantriacrylat
VCp = N-Vinylcaprolactam

### Beispiel 10

Es wurde ein Polyurethanacrylat = PUA 10 berechnet mit folgenden Kenndaten:

Molekulargewicht (Zahlenmittel) : 6000
Acryl.-Funktionalität (Zahlenmittel) : 3
Vernetzungskonz. (Mol Acryl./kg) : 0,5
NH-Gruppenkonz. (Mol NH/kg) : 2,82

| Komponente im PUA | | Äquivalentverhältnis | Ansatzmenge (Gramm) |
|---|---|---|---|
| 1) Isocyanat | : TDI 80 | 10,30 | 368,6 |
| 2) polymeres Diol | : PHC 1000 | 1,68 | 690,0 |
| 3) einfaches Diol | : Dianol | 4,67 | 303,8 |
| 4) OH-Alkylacrylat | : BMA | 1,82 | 104,3 |
| 5) Triol | : TMP | 1,82 | 33,6 |

Das Produkt wurde als 60 %-ige Lösung in Tetrahydrofuran hergestellt. K-Wert (3 %-ig in THF) nach Fikentscher: 31,5

Das Polyurethanacrylat PUA 10 wurde ohne weitere elektronenstrahlhärtbare Zusätze direkt als Bindemittel BM 10 eingesetzt:

Die Elektronenstrahlhärtung ergibt:

80 % Dosis: 44 kGray
90 % Dosis: 64 kGray

| Mechanische Eigenschaften mit | : 30 | 70 kGray |
|---|---|---|
| Elastizitätsmodul (N/mm$^2$) | : 481 | 579 |
| Reißfestigkeit (N/mm$^2$) | : 38 | 42 |
| Reißdehnung (%) | : 142 | 146 |

Abkürzungen:
TDI 80 = 2,4- + 2,6-Toluylendiisocyanat 80 : 20
PHC 1000 = Polyhexandiol-1,6-carbonat, OH-Äquiv.Gew. 1000
Dianol = Bisethoxyliertes Bisphenol-A
TMP = Trimethylolpropan
BMA = Butandiol-1,4-monoacrylat

### Beispiel 11

436 Teile einer 55 %-igen Bindemittellösung in THF, wie in Beispiel 1 beschrieben, wurden zusammen mit 928 Teilen Tetrahydrofuran sowie mit 1200 Teilen Chromdioxid mit einer Koerzitivfeldstärke von 49,0 kA/m, 1,2 Teilen Silikonöl und 30 Teilen Zinkoleat in einer 6000 Volumenteile fassenden und mit 8000 Gewichtsteilen Stahlkugeln eines Durchmessers von 4 bis 6 mm gefüllten Kugelmühle 46 Stunden dispergiert. Die erhaltene Dispersion wurde unter Druck durch einen Filter mit 5 µm Poren filtriert und auf eine 12 µm dicke Polyethylenterephthalatfolie mittels eines üblichen Linealgießers aufgetragen.

Die beschichtete Folie wurde nach Durchlaufen eines üblichen Magnetfeldes zur Ausrichtung der magnetischen Teilchen zwischen 60 und 80°C getrocknet. Nach der Trocknung wurde die Magnetschicht der beschichteten Folie durch zweimaliges Hindurchziehen zwischen beheizten Walzen (70°C unter einem Liniendruck von 35 kg/cm) verdichtet und geglättet. Die Dicke der Magnetschicht betrug dann 5,1 µm. Die Beschichtungen wurden anschließend mit einer Elektronenstrahldosis von 20 kGray gehärtet. Nach dem Schneiden der beschichteten Folie in 3,81 ml breite Audiobänder wurden diese magnetischen, elektroakustischen und mechanischen Prüfungen unterworfen. Es wurde die Oberflächenrauhigkeit als gemittelte Rautiefe R$_z$ gemäß DIN 4768, Blatt 1, bestimmt. Bei den Aufzeichnungseigenschaften wurden die elektroakustischen Werte gemäß DIN 45401, 45403 und 45512 (Blatt 12) gegen das Bezugsband C 401 R geprüft.

19

Magnetwerte:            $R_z$-Wert        : 0,21 μm
$H_c$   (kA/m) 48,6       Mikrohärte    : 10,2 kp
$M_r$   (mT)   178
Richtfaktor    3,9

Elektroakustische Daten:
$E_T$    (dB)   + 0,6
$E_H$   (dB)   + 3,2
$A_T$    (dB)   + 1,5
$A_H$   (dB)   + 5,5
$RG_A$  (dB)   + 0,2
$K_o$    (dB)   + 4,0

Die mechanischen Bandeigenschaften hinsichtlich Abriebwerten, Reibungskoeffizienten, Haftung usw. waren ausgezeichnet bzw. sehr gut.

**Beispiel 12**

a) Der Versuch des Beispiels 11 wurde wiederholt, die Elektronenstrahldosis jedoch auf 70 kGray erhöht. Es wurden keine signifikanten Änderungen der magnetischen und elektroakustischen Eigenschaften festgestellt.
Mikrohärte: 10,7 kp
b) Der Versuch wurde mit einer Bestrahlungsdosis von 100 kGray wiederholt.
Mikrohärte: 10,7 kp

**Beispiel 13**

374 Teile einer 53,5 %-igen Bindemittellösung in THF, wie in Beispiel 5 beschrieben, wurden zusammen mit 1039 Teilen Tetrahydrofuran sowie mit 1200 Teilen Chromdioxid mit einer Koerzitivfeldstärke von 39,0 kA/m, 1,2 Teilen Silikonöl und 30 Teilen Zinkoleat in einer 6000 Volumenteile fassenden und mit 8000 Gewichtsteilen Stahlkugeln eines Durchmessers von 4 bis 6 mm gefüllten Kugelmühle 50 Stunden dispergiert. Die erhaltene Dispersion wurde unter Druck durch einen Filter mit 5 μm Poren filtriert und auf eine 12 μm dicke Polyethylenterephthalatfolie mittels eines üblichen Linealgießers aufgetragen.

Die beschichtete Folie wurde nach Durchlaufen eines üblichen Magnetfeldes zur Ausrichtung der magnetischen Teilchen zwischen 60 und 80°C getrocknet. Nach der Trocknung wurde die Magnetschicht der beschichteten Folie durch zweimaliges Hindurchziehen zwischen beheizten Walzen (70°C unter einem Liniendruck von 35 kg/cm) verdichtet und geglättet. Die Dicke der Magnetschicht betrug dann 5,1 μm. Die Beschichtungen wurden anschließend mit einer Elektronenstrahldosis von 20 kGray gehärtet. Nach dem Schneiden der beschichteten Folie in 3,81 mm breite Audiobänder wurden diese magnetischen, elektroakustischen und mechanischen Prüfungen, wie in Beispiel 11 beschrieben, unterworfen.

Magnetwerte:            $R_z$-Wert        : 0,32 μm
$H_c$   (kA/m) 38,5       Mikrohärte    : 8,8 kp
$M_r$   (mT)   200
Richtfaktor    3,5

Elektroakustische Daten:
$E_T$    (dB)   + 2,0
$E_H$   (dB)   + 1,0
$A_T$    (dB)   + 4,0
$A_H$   (dB)   + 0,5
$RG_A$  (dB)   - 0,2
$K_o$    (dB)   + 1,2

Es ergaben sich gute Abriebwerte und Reibungskoeffizienten.

**Beispiel 14**

Der Versuch des Beispiels 13 wurde wiederholt, die Elektronenstrahldosis jedoch auf 70 kGray erhöht. Es wurden keine signifikanten Änderungen der magnetischen und elektroakustischen Eigenschaften festgestellt. Mikrohärte: 8,9 kp

**Beispiel 15**

3207 Teile einer 48,5 %-igen Bindemittellösung in THF, wie in Beispiel 9 beschrieben, wurden zusammen mit 2549 Teilen Tetrahydrofuran und 4200 Teilen Dioxan sowie mit 7000 Teilen Chromdioxid mit einer Koerzitivfeldstärke von 48 kA/m, 7,0 Teilen Silikonöl und 175 Teilen Zinkoleat in einer 30000 Volumenteile fassenden und mit 40000 Gewichtsteilen Stahlkugeln eines Durchmessers von 4 bis 6 mm gefüllten Kugelmühle 52 Stunden dispergiert. Die erhaltene Dispersion wurde unter Druck durch einen Filter mit 5 µm Poren filtriert und auf eine 10 µm dicke Polyethylenterephthalatfolie mittels eines üblichen Linealgießers aufgetragen.

Die beschichtete Folie wurde nach Durchlaufen eines üblichen Magnetfeldes zur Ausrichtung der magnetischen Teilchen zwischen 60 und 80°C getrocknet. Nach der Trocknung wurde die Magnetschicht der beschichteten Folie durch zweimaliges Hindurchziehen zwischen beheizten Walzen (70°C unter einem Liniendruck von 35 kg/cm) verdichtet und geglättet. Die Dicke der Magnetschicht betrug dann 3,0 µm. Die Beschichtungen wurden anschließend mit einer Elektronenstrahldosis von 30 kGray gehärtet. Nach dem Schneiden der beschichteten Folie in 0,5 Zoll breite Videobänder wurden diese magnetischen, video- und mechanischen Prüfungen unterworfen.

Magnetwerte: $\quad\quad\quad R_z$-Wert $\quad\quad : 0,15\ \mu m$
$H_c$ (kA/m) 48,1
$M_r$ (mT) 165
Richtfaktor 3,7

Video-Daten gegen $CrO_2$-Referenzband für VHS-Aufzeichnungsverfahren:

Hochfrequenzpegel bei 4,5 MHz $\quad\quad : + 2,4\ dB$
Chromapegel bei 630 Hz $\quad\quad\quad : + 2,4\ dB$
Störabstand $\quad\quad\quad\quad\quad\quad\quad : + 1,8\ dB$
Chromastörabstand $\quad\quad\quad\quad : + 0,6\ dB$
Standbildfestigkeit größer als 60 Minuten
Dauerlauf: nach 200 Stunden Band noch in Ordnung.

**Beispiel 16**

Der Versuch aus Beispiel 15 wurde wiederholt und die Beschichtung mit 70 kGray bestrahlt. Es wurden keine wesentlichen Unterschiede in den Video-Daten und in den mechanischen Eigenschaften gefunden.

**Patentansprüche**

1. Magnetische Aufzeichnungsträger aus einem nichtmagnetischen Trägermaterial mit mindestens einer Magnetschicht, bestehend aus einer organischen Bindemittelmatrix mit darin feinverteiltem magnetischen Material, wobei die Bindemittelmatrix durch Elektronenstrahlhärtung einer Mischung aus 60 bis 100 Gew.-% eines Polyurethanacrylatpolymeren mit polymerisierbaren Acrylester-Doppelbindungen und 0 bis 40 % eines Acrylestermonomeren und/oder -präpolymeren und/oder N-Vinylmonomeren erhalten wird und das Polyurethanacrylatpolymere verzweigt ist und aus

1) mindestens einem Diisocyanat
2) mindestens einem oligomeren oder polymeren Diol,
3) mindestens einem niedermolekularen Diol,
4) mindestens einem Monohydroxyalkylacrylat und
5) mindestens einem niedermolekularen Triol

aufgebaut ist, wobei der Anteil der NCO-Gruppen des Diisocyanats 95 % bis 105 % der äquivalenten Mengen an OH-Gruppen der Komponenten 2 bis 5 beträgt und die Molmengen der OH-gruppenhaltigen Komponenten derart bemessen sind, daß sich eine Konzentration von 2,4 bis 3,7 Mol Urethangruppen je Kilogramm Polyurethanacrylatpolymeres und eine mittlere Zahl von mehr als zwei und weniger als vier Acrylestergruppen pro Durchschnittsmolekül ergibt, mit der Maßgabe, daß das Molekulargewicht des Polymeren breit verteilt ist und im Zahlenmittel 2000 bis 10000 und das Verhältnis von Gewichtsmittel zu Zahlenmittel des Molgewichts 2,2 bis 3,5 beträgt.

2. Magnetische Aufzeichnungsträger gemäß Anspruch 1, dadurch gekennzeichnet, daß die Komponente (1) aus einem Gemisch aus Di- und Polyisocyanaten besteht.

3. Magnetische Aufzeichnungsträger gemäß Anspruch 1 oder 2, dadurch gekennzeichnet, daß die Komponente (3) ein cyclisches Diol ist.

4. Magnetische Aufzeichnungsträger aus einem nichtmagnetischen Trägermaterial mit mindestens einer Magnetschicht, bestehend aus einer organischen Bindemittelmatrix mit darin feinverteiltem magnetischen Material, wobei die Bindemittelmatrix durch Elektronenstrahlhärtung einer Mischung aus 60 bis 100 Gew.-% eines Polyurethanacrylatpolymeren mit polymerisierbaren Acrylester-Doppelbindungen und 0 bis 40 % eines Acrylestermonomeren und/oder -präpolymeren und/oder N-Vinylmonomeren erhalten wird und das Polyurethanacrylatpolymere verzweigt ist und aus

1) mindestens einem Gemisch aus Di- und Polyisocyanaten
2) mindestens einem oligomeren oder polymeren Diol,
3) mindestens einem niedermolekularen Diol,
4) und mindestens einem Monohydroxyalkylacrylat

aufgebaut ist, wobei der Anteil der NCO-Gruppen des Diisocyanats 95 % bis 105 % der äquivalenten Mengen an OH-Gruppen der Komponenten 2 bis 5 beträgt und die Molmengen der OH-gruppenhaltigen Komponenten derart bemessen sind, daß sich eine Konzentration von 2,4 bis 3,7 Mol Urethangruppen je Kilogramm Polyurethanacrylatpolymeres und eine mittlere Zahl von mehr als zwei und weniger als vier Acrylestergruppen pro Durchschnittsmolekül ergibt, mit der Maßgabe, daß das Molekulargewicht des Polymeren breit verteilt ist und im Zahlenmittel 2000 bis 10000 und das Verhältnis von Gewichtsmittel zu Zahlenmittel des Molgewichts 2,2 bis 3,5 beträgt.

5. Magnetische Aufzeichnungsträger gemäß Anspruch 4, dadurch gekennzeichnet, daß die Komponente (3) ein cyclisches Diol ist.

## Claims

1. A magnetic recording medium which comprises a non-magnetic base and one or more magnetic layers consisting of an organic binder matrix containing finely divided magnetic material, the said matrix being obtained by electron beam curing of a mixture of from 60 to 100 % by weight of a polyurethane acrylate polymer possessing polymerizable acrylate double bonds and from 0 to 40 % by weight of an acrylate monomer and/or acrylate prepolymer and/or N-vinyl monomer and the polyurethane acrylate polymer is-branched and consists of

1) one or more diisocyanates,
2) one or more oligomeric or polymeric diols,
3) one or more low molecular weight diols,
4) one or more monohydroxyalkyl acrylates and
5) one or more low molecular weight triols,

and the amount of NCO groups of the diisocyanate is from 95 to 105 % of the number of equivalents of OH groups of components 2, 3, 4 and 5 and the molar amounts of the OH-containing components are chosen so that the concentration of urethane groups is from 2.4 to 3.7 moles per kg of polyurethane acrylate polymer and the mean number of acrylate groups per average molecule is greater than two and less than four, with the proviso that the polymer has a broad molecular weight distribution, the number-average molecular weight is from 2,000 to 10,000 and the ratio of the weight-average to the number-average molecular weight is from 2.2 to 3.5.

2. A magnetic recording medium as claimed in claim 1, wherein component (1) consists of a mixture of diisocyanates and polyisocyanates.

3. A magnetic recording medium as claimed in claim 1 or 2, wherein component (3) is a cyclic diol.

4. A magnetic recording medium which comprises a non-magnetic base and one or more magnetic layers consisting of an organic binder matrix containing finely divided magnetic material, the said matrix being obtained by electron beam curing of a mixture of from 60 to 100 % by weight of a polyurethane acrylate polymer possessing polymerizable acrylate double bonds and from 0 to 40 % by weight of an acrylate monomer and/or acrylate prepolymer and/or N-vinyl monomer and the polyurethane acrylate polymer is branched and consists of

1) one or more mixtures of diisocyanates and polyisocyanates,

2) one or more oligomeric or polymeric diols,
3) one or more low molecular weight diols and
4) one or more monohydroxyalkyl acrylates

and the amount of NCO groups of the diisocyanate is from 95 to 105 % of the number of equivalents of OH groups of components 2, 3, 4 and 5 and the molar amounts of the OH-containing components are chosen so that the concentration of urethane groups is from 2.4 to 3.7 moles per kg of polyurethane acrylate polymer and the mean number of acrylate groups per average molecule is greater than two and less than four, with the proviso that the polymer has a broad molecular weight distribution, the number-average molecular weight is from 2,000 to 10,000 and the ratio of the weight-average to the number-average molecular weight is from 2.2 to 3.5.

5. A magnetic recording medium as claimed in claim 4, wherein component (3) is a cyclic diol.

## Revendications

1. Support d'enregistrement magnétique en un matériau de support non magnétique avec au moins une couche magnétique constituée d'une matrice de liant organique dans laquelle est finement dispersé un matérieu magnétique, la matrice de liant étant obtenue per durcissement, à l'aide de rayons électroniques, d'un mélange de 60 à 100 % en poids d'un polymère d'acrylate de polyuréthanne à doubles liaisons ester acrylique, polymérisables et 0 à 40 % d'un monomère et/ou prépolymère d'ester acrylique et/ou monomère N-vinylique et le polymère d'acrylate de polyuréthanne étant ramifié et constitué de

1) au moins un diisocyanate
2) au moins un diol oligomère ou polymère,
3) au moins un diol à bas poids moléculaire
4)
   au moins un acrylate de monohydroxyalkyle
5) au moins un triol à bas poids moléculaire,

la proportion des groupes NCO du diisocyanate s'élevant à 95 % à 105 % de la quantité équivalente en groupes OH des composants 2 à 5 et les quantités molaires des composants à groupes OH étant calculées de manière que l'on aboutisse à une concentration de 2,4 à 3,7 moles de groupes uréthane par kilogramme de polymère d'acylate de polyuréthanne et un nombre moyen supérieur à deux et inférieur à quatre de groupes ester acrylique par molécule moyenne, avec la condition que le poids moléculaire du polymère soit largement distribué et de moyenne en nombre de 2 000 à 10 000 et que le rapport entre la moyenne en poids et la moyenne en nombre du poids moléculaire soit de 2,2 à 3,5.

2. Support d'enregistrement magnétique selon la revendication 1, caractérisé par le fait que le composant (1) est constitué d'un mélange de di- et polyisocyanates.

3. Support d'enregistrement magnétique selon la revendication 1 ou 2, caractérisé par le fait que le composant (3) est un diol cyclique.

4. Support d'enregistrement mangétique en un matériau de support non magnétique avec au moins une couche magnétique constituée d'une matrice de liant organique dans laquelle est finement dispersé un matériau magnétique, la matrice de liant étant obtenue par durcissement, à l'aide de rayons électroniques, d'un mélange de 60 à 100 % en poids d'un polymère d'acrylate de polyuréthanne à doubles liaisons ester acrylique, polymérisables et 0 à 40 % d'un monomère et/ou prépolymère d'ester acrylique et/ou monomère N-vinylique et le polymère d'acrylate de polyuréthanne étant ramifié et constitué de

1) au moins un mélange de di- et polyisocyanates
2) au moins un diol oligomère ou polymère
3) au moins un diol à bas poids moléculaire
4) et eu moins un acrylate de monohydroxyalkyle

la proportion des groupes NCO du diisocyanate s'élevant à 95 % à 105 % de la quantité équivalente en groupes OH des composants 2 à 4 et les quantités molaires des composants à groupes OH étant calculées de manière que l'on aboutisse à une concentration de 2,4 à 3,7 moles de groupes uréthane par kilogramme de polymère d'acylate de polyuréthanne et un nombre moyen supérieur à deux et inférieur à quatre de groupes ester acrylique par molécule moyenne, avec la condition que le poids moléculaire du polymère soit largement distribué et de moyenne en nombre de 2 000 à 10 000 et que le rapport entre la moyenne en poids et la moyenne en nombre du poids moléculaire soit de 2,2 à 3,5.

5. Support d'enregistrement magnétique selon la revendication 4, caractérisé par le fait que le composant (3) est un diolcyclique.